# EUROPEAN PATENT SPECIFICATION

(11) **EP 4 455 568 B1**
(45) Date of publication and mention of the grant of the patent: **13.08.2025**
(21) Application number: 24172329.5
(22) Date of filing: 25.04.2024
(51) Int. Cl.: F24F 6/00, F24F 110/10, F24F 6/12, F24F 6/08, F24F 6/02

(54) **HUMIDIFIER**
BEFEUCHTER
HUMIDIFICATEUR

(30) Priority: 27.04.2023 KR 20230055151
(43) Date of publication of application: 30.10.2024
(60) Divisional application: 25184147.4
(73) Proprietor: LG Electronics Inc., Yeongdeungpo-gu Seoul 07336 (KR)
(72) Inventor: PARK, Keunman, 08592 Seoul (KR); HA, Hyunpil, 08592 Seoul (KR); LEE, Sangheon, 08592 Seoul (KR); LEE, Kunyoung, 08592 Seoul (KR)
(74) Representative: Vossius & Partner Patentanwälte Rechtsanwälte mbB

(56) References cited:
- JP-A- 2014 214 923
- KR-A- 20050 039 112
- KR-A- 20100 056 232
- KR-A- 20130 092 093
- KR-A- 20210 110 537
- KR-A- 20230 009 546
- KR-B1- 101 276 044

## Description

This invention relates to a humidifier, and more particularly, to a humidifier that generates humidified air by using sterilized water.

A humidifier is an apparatus that evaporates water and emits humidified air with a high moisture content. A humidifier can create humidified air by evaporating water through natural evaporation, heated evaporation, or ultrasonic vibration.

Each evaporation method has its advantages and disadvantages. In the case of natural evaporation, there is a problem that a user must frequently manage the humidifying medium used.

In the case of evaporation by ultrasonic vibration, there are problems in that the humidified air may not flow actively into the indoor space by atomizing the supplied water with ultrasonic vibration, in that unpleasant humidified air may flow into the indoor space when unsterilized water is humidified, and in that ultrasonic vibrator is vulnerable to high temperature heat.

In the case of heating evaporation, safety accidents may occur if hot humidified air is discharged directly.

Korean registered patent KR 10-0158806 discloses a humidifier that humidifies water supplied from a water tank by heating and ultrasonic vibration.

However, the prior document discloses a structure in which a water heating space and a humidifying space are connected to each other. This causes a problem that the water cannot be completely sterilized when the water heating temperature is maintained below a set temperature in consideration of an ultrasonic vibrator. In addition, when water is heated to sterilize and sent to the ultrasonic vibrator, there is a problem that the ultrasonic vibrator may malfunction. That is, in the case of prior document, there is difficulty in completely sterilizing and humidifying water.

In addition, if a heater for heating and a vibrator for humidification are disposed in the same space, a problem that water that is not completely heated may be humidified may occur.

KR 101 276 044 discloses a humidifier configured to generate humidified air by using water supplied from the first humidifying water tank by using an ultrasonic vibrator. a

The invention is specified by the independent claim. Preferred embodiments are defined by the dependent claims. The invention has been made in view of the above problems, and provides a humidifier that humidifies water completely sterilized through heating.

In addition, the invention further provides a humidifier in which a vibrator inside a humidifying water tank supplied with high-temperature heated water can operate stably.

In addition, the invention may further provide a humidifier that can cool high-temperature heated water flowing into a humidifying water tank.

In addition, the invention may further provide a humidifier that discharges humidified air by using water from which ions in water are removed and pure clean water sterilized by heating.

In addition, the invention may further provide a humidifier that can stably maintain the water level inside a first humidifying water tank that heats water and a second humidifying water tank that humidifies water.

In addition, the invention may further provide a humidifier that can stably operate through information on the temperature or water level of water in a first humidifying water tank and water in a second humidifying water tank.

In accordance with an aspect of the present invention, a humidifier includes: a tank which stores water; a first humidifying water tank which is disposed in a lower side of the water tank, and heats water supplied from the water tank by using a heater; a second humidifying water tank which is disposed in a lower side of the water tank, and generates humidified air by using water supplied from the first humidifying water tank by using a vibrator; a first connection pipe connecting the first humidifying water tank and the second humidifying water tank; a first valve which opens and closes a flow path connecting the water tank and the first humidifying water tank; a second valve which opens and closes the first connection pipe; and a first temperature sensor which detects a temperature of water inside the first humidifying water tank, wherein the second valve opens the first connection pipe, when the temperature of water detected by the first temperature sensor is equal to or higher than a first set temperature, so that humidified air can be generated by using completely sterilized water.

When the second valve opens the first connection pipe, water in the first humidifying water tank flows into the second humidifying water tank due to a difference between a water level of the first humidifying water tank and a water level of the second humidifying water tank, so that water heated in the second humidifying water tank can be supplied to the humidifier without the need for a separate pump.

The first valve is disposed closer to the first humidifying water tank than the second humidifying water tank, so that a flow path through which heated water flows into the second humidifying water tank can be secured. The water flowing into the second humidifying water tank may be partially cooled.

The humidifier further includes a second temperature sensor which detects a temperature of water stored inside the second humidifying water tank, and the vibrator operates, when the temperature of water in the second humidifying water tank detected by the second temperature sensor is below a set temperature, thereby preventing the vibrator from operating at high temperatures.

The humidifier further includes a first water level sensor which detects a water level inside the first humidifying water tank, and the first valve stops water supplied to the first humidifying water tank, when the water level detected by the first water level sensor is equal to or higher than a first set water level.

A fan, which supplies air to the second humidifying water tank, operates, when the heater heats water stored in the first humidifying water tank.

In the first humidifying water tank, an outlet hole is formed in a portion connected to the first connection pipe, and the first temperature sensor is disposed in a position equal to or lower than the outlet hole, even when the water in the first humidifying water tank flows as much as possible into the second humidifying water tank, the temperature sensor can detect the water temperature in the first humidifying water tank.

The humidifier further includes a second water level sensor which detects a water level inside the second humidifying water tank, and the second valve opens the first connection pipe, when a level difference between water stored inside each of the first humidifying water tank and the second humidifying water tank detected by the first water level sensor and the second water level sensor is formed.

Operation of the vibrator is stopped, when water level stored in the second humidifying water tank detected by the second water level sensor is lower than a set water level, thereby preventing the vibrator from being damaged by operating the vibrator when a certain water level is not formed.

The second humidifying water tank includes a water level sensor cover disposed between the second water level sensor and the vibrator, thereby improving the accuracy of the second water level sensor.

The second valve opens the first connection pipe for a set time, so that the water supplied to the second humidifying water tank can be adjusted.

The humidifier further includes a second temperature sensor which detects a temperature of water stored inside the second humidifying water tank, and the vibrator operates, when the temperature of water inside the second humidifying water tank detected by the second temperature sensor is below a set temperature, thereby preventing the vibrator from operating at high temperatures.

In the second humidifying water tank, an inlet hole is formed in a portion connected to the first connection pipe, and the second temperature sensor is disposed at the same height as the inlet hole or at a lower height than the inlet hole, so that the temperature of the water flowing from the first humidifying water tank can be quickly detected.

The humidifier further includes a second connection pipe which is spaced apart from the first connection pipe, and connects the first humidifying water tank and the second humidifying water tank; and a pump which supplies water stored inside the second humidifying water tank to the first humidifying water tank through the second connection pipe, wherein the pump operates after the vibrator stops operating, so that when the generation of humidified air is completed, water can be returned to the first humidifying water tank.

The pump operates in consideration of a water level inside the first humidifying water tank detected by the first water level sensor and a water level inside the second humidifying water tank detected by the second water level sensor, thereby preventing water from being recovered beyond the range in which the first humidifying water tank can store.

The humidifier further include a water softener which is disposed inside the water tank, and removes ion from water discharged from the water tank; a supply pipe which connects the water tank and the first humidifying water tank; and a detection sensor which detects a quality of water stored inside the supply pipe, and the first valve is disposed in one end of the supply pipe, and controls water supplied to the first humidifying water tank, so that humidified air can be generated by heating water from which ions are removed.

The first valve supplies water to the first humidifying water tank, when the quality of water detected by the detection sensor is equal to or higher than a set level, so that humidified air can be generated by heating water from which ions are removed.

In accordance with another aspect of the present invention, a humidifier includes: a first humidifying water tank in which a first chamber to heat water stored therein is formed; a second humidifying water tank in which a second chamber which generates humidified air by using water stored therein is formed; and a connection pipe which supplies the water heated in the first humidifying water tank to the second humidifying water tank, wherein the second humidifying water tank includes: a second humidifying water tank wall which forms the second chamber; a vibrator which is disposed in a lower side of the second humidifying water tank wall, and atomizes water stored in the second chamber; and a temperature sensor which detects a temperature of the water stored in the second chamber, wherein the vibrator operates, when the temperature detected by the temperature sensor is below a set temperature, thereby preventing the vibrator from operating in the presence of high temperature heated water.

The second humidifying water tank further comprises a water level sensor which detects a water level inside the second humidifying water tank, and the vibrator operates when the water level in the second humidifying water tank is equal to or higher than a set water level, thereby preventing the vibrator from operating in a state where the water level is not secured, as the vibrator operates.

In accordance with another aspect of the present invention, a humidifier includes: a first humidifying water tank in which a first chamber to heat water stored therein is formed; a second humidifying water tank in which a second chamber which generates humidified air by using water stored therein is formed; a connection pipe which supplies the water heated in the first humidifying water tank to the second humidifying water tank; and a valve which opens and closes the connection pipe, wherein the first humidifying water tank includes: a first humidifying water tank wall which forms the first chamber; and a heater which is disposed in a lower side of the first humidifying water tank wall, and heat water stored in the first chamber, wherein the heater operates when the valve closes the connection pipe, so that completely heated and sterilized water can be supplied to the second humidifying water tank.

### BRIEF DESCRIPTION OF THE DRAWINGS

The above and other objects, features and advantages of the present invention will be more apparent from the following detailed description in conjunction with the accompanying drawings, in which:
FIG. 1 is a perspective view of a humidifier according to an embodiment of the present invention;
FIG. 2 is a plan view of FIG. 1;
FIG. 3 is a cross-sectional view taken along line III-III' of FIG. 2;
FIG. 4 is an exploded perspective view of a water tank cover, an inner water tank, an outer water tank, an inner shell, and an outer shell according to an embodiment of the present invention;
FIG. 5 is a cross-sectional view of an inner water tank according to an embodiment of the present invention;
FIG. 6 is an exploded perspective view of a water tank, an inner shell, and a middle tray according to an embodiment of the present invention;
FIG. 7 is a perspective view of a middle tray according to an embodiment of the present invention;
FIG. 8 is a cross-sectional perspective view of one side of a coupled structure including a water tank, an inner shell, and a middle tray according to an embodiment of the present invention;
FIG. 9 is a perspective view of a state where a humidifying module and a middle tray are coupled according to an embodiment of the present invention;
FIG. 10 is a cross-sectional view cut off one side of FIG. 9;
FIG. 11 is one side view of a structure in which a first humidifying water tank and a second humidifying water tank are coupled according to an embodiment of the present invention;
FIG. 12 is a side view in another direction of a structure in which a first humidifying water tank and a second humidifying water tank are coupled according to an embodiment of the present invention;
FIG. 13 is a cross-sectional view in one direction of a structure in which a first humidifying water tank and a second humidifying water tank are coupled according to an embodiment of the present invention;
FIG. 14 is a cross-sectional view in a direction different from that of FIG. 13;
FIG. 15 is a perspective view for explaining the upper surfaces of a first humidifying water tank and a second humidifying water tank according to an embodiment of the present invention;
FIG. 16 is a cross-sectional view of one side for explaining the arrangement of a second supply hole in a heating water tank according to an embodiment of the present invention;
FIG. 17 is a schematic diagram for explaining the specific connection relationship and internal configuration arrangement of a first humidifying water tank and a second humidifying water tank according to an embodiment of the present invention;
FIG. 18 is a schematic diagram for explaining the internal configuration of a first humidifying water tank and a structure connected thereto according to an embodiment of the present invention;
FIG. 19 is a perspective view of a state where a humidifying module and a middle tray are coupled according to a second embodiment of the present invention;
FIG. 20 is a cross-sectional view cut off one side of FIG. 19;
FIG. 21 is a cross-sectional view with a flow path case added to FIG. 20;
FIG. 22 is a perspective view of a humidifying module housing according to a second embodiment of the present invention;
FIG. 23 is a schematic diagram for explaining the specific connection relationship and internal configuration arrangement of a first humidifying water tank and a second humidifying water tank according to a second embodiment of the present invention.

### DETAILED DESCRIPTION

Advantages and features of the present invention and methods of achieving them will become apparent with reference to the embodiments described below in detail in conjunction with the accompanying drawings. However, the present invention is not limited to the embodiments disclosed below, but may be implemented in various different forms, and these embodiments are provided only to allow the invention of the present invention to be complete, and to completely inform those of ordinary skill in the art to which the present invention belongs, the scope of the invention, and the present invention is only defined by the scope of the claims. Like reference numerals refer to like elements throughout.

Hereinafter, the present invention will be described with reference to the drawings for explaining a humidifier according to embodiments of the present invention.

### <Overall structure>

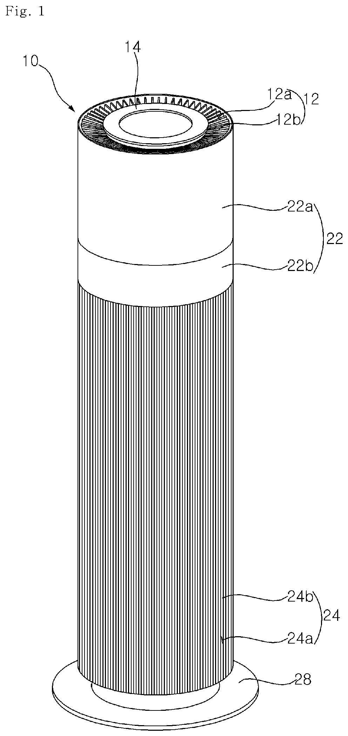

First, the overall configuration of a humidifier of the present invention will be described with reference to FIGS. 1 to 3.

The humidifier of the present invention may humidify water by using ultrasonic vibration. The humidifier of the present invention may discharge humidified air by heating water. The humidifier of the present invention may discharge humidified air generated by ultrasonic vibration and humidified air generated by heating.

Referring to FIGS. 1 to 3, the humidifier may include a case 10 that forms an outer shape and has an inlet 24a and an outlet 12a, a filter device that is disposed inside the case 10 and filters the air flowing into the inlet 24a, a blower 60 that is disposed inside the case 10 and flows the air inside the case 10 from the inlet 24a to the outlet 12a, and a humidifying module that is disposed inside the case 10 and humidifies a portion of the air flowing to the blower 60.

The humidifying module may include a first humidifying water tank 300 that heats water and a second humidifying water tank 350 that generates humidified air by using water. The humidifying module may include a humidifying module housing 410 that covers the circumference of the first humidifying water tank 300 and the second humidifying water tank 350. A flow path housing 430 may be disposed in the outer circumference of the humidifying module housing 410. A blowing flow path 70 may be formed between the humidifying module housing 410 and the flow path housing 430. The configuration and arrangement of the humidifying module will be described in detail below.

### <Case>

The case 10 may have an overall cylindrical shape.

The case 10 may include a suction grill 24 forming an inlet 24a through which air flows in, and a discharge grill 12 forming an outlet 12a through which air is discharged.

The inlet 24a may be formed on the circumferential surface of the case 10 having a cylindrical shape. The outlet 12a may be formed on the upper surface of the case 10 having a cylindrical shape. The humidifier of the present invention may flow air into the circumferential surface and discharge air to the upper surface.

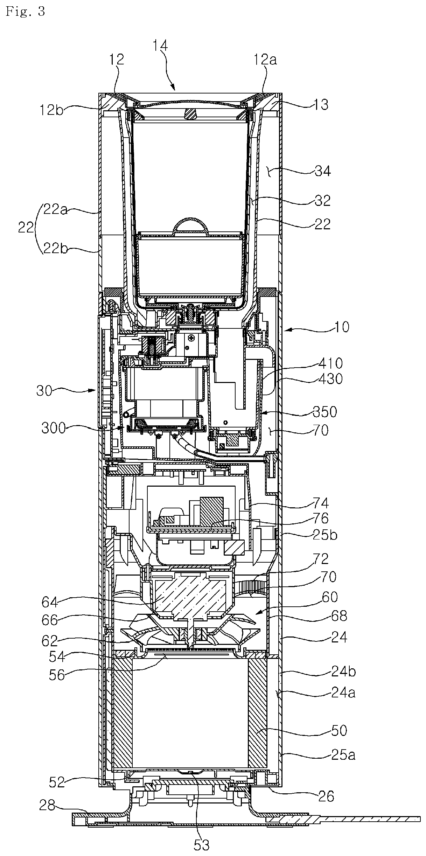

Referring to FIG. 3, the suction grill 24 may cover the outside of a filter 50 and a blower housing 68 which will be described below. A plurality of inlets 24a may be formed, in the suction grill 24, in the vertical direction and spaced apart in the circumferential direction. The inlet 24a may be formed around where the filter 50 is disposed. The inlet 24a may be formed in the lower portion of the suction grill 24. The inlet 24a may be formed in the lower portion of the suction grill 24, and the upper portion of the suction grill 24 may be formed closed to protect the internal component of the humidifier.

A plurality of grills 24b extending in the up-down direction are disposed in the suction grill 24. The plurality of grills 24b may be disposed to be spaced apart in the circumferential direction of the suction grill 24. A plurality of inlets 24a may be formed between the plurality of grills 24b.

The suction grill 24 may be divided into a suction grill lower portion 25a in which the inlet 24a is formed, and a suction grill upper portion 25b disposed in the upper side of the suction grill lower portion 25a. A display 30, which will be described below, may be disposed in the suction grill upper portion 25b. The suction grill upper portion 25b may cover the blower housing 68 and the outside of the humidifying module described below.

The humidifier may include a discharge grill 12 forming the outlet 12a and a water tank cover 14 disposed in the upper side of the water tank 100. The discharge grill 12 may have a structure that is separated upward from an outer shell 22 described below. The water tank cover 14 may have a structure that is separated from the discharge grill 12 or the water tank 100. The discharge grill 12 may include a plurality of ribs 12b extending in a radial direction from the outer circumference of the water tank cover 14. The plurality of ribs 12b disposed in the discharge grill 12 may be disposed to be spaced apart in the circumferential direction in the outer circumference of the water tank cover 14.

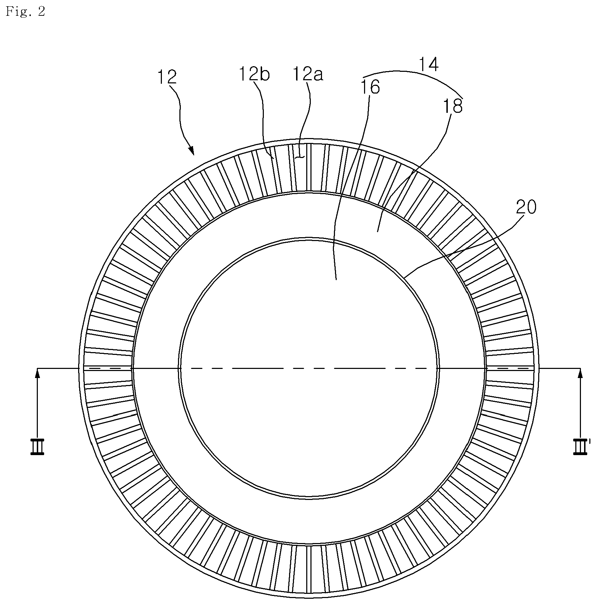

Referring to FIG. 2, the water tank cover 14 may include a central cover 16 and a peripheral cover 18 disposed around the central cover 16. The central cover 16 may have a structure that is convex upward as it progresses toward a center. A water supply hole 20 through which water flows into the water tank 100 may be formed between the peripheral cover 18 and the central cover 16.

Referring to FIG. 1, the discharge grill 12 may be disposed above a first discharge flow path 32 and a second discharge flow path 34 which will be described below. A plurality of ribs 12b and a plurality of outlets 12a may be formed in the discharge grill 12.

The discharge grill 12 may have a constant height in the up-down direction. Accordingly, a mixing passage 13 may be formed between the plurality of ribs 12b disposed in the discharge grill 12. In the mixing passage 13, the air flowing through the first discharge flow path 32 and the air flowing through the second discharge flow path 34 may be mixed.

In each of the plurality of ribs 12b, the height of the outer circumferential end is formed to be higher than the height of the inner peripheral end. Accordingly, the air flowing through the first discharge flow path 32 and the second discharge flow path 34 can be guided inward in the radial direction.

The case 10 may include an outer shell 22 that guides air flowing inside to the outlet 12a. The outer shell 22 may form an inner shell 180 and the second discharge flow path 34 which will be described below.

The outer shell 22 includes an upper outer shell 22a disposed below the discharge grill 12 and a lower outer shell 22b disposed below the upper outer shell 22a. The lower outer shell 22b may be formed of a transparent material.

The case 10 may include a lower wall 26 that covers the lower side of the suction grill 24.

The humidifier may include a pedestal 28 that is disposed on the lower side of the case 10 and spaced apart from the lower wall 26 by a certain distance from the ground. The upper end of the pedestal 28 may be connected to the lower wall 26. The lower wall 26 is disposed to cover the lower surface of the humidifier spaced upward from the ground by the pedestal 28.

Referring to FIG. 2, a display 30 is disposed in one side of the case 10. The display 30 allows a user to control the power or operation of the humidifier. A display that displays the operating state of the humidifier to a user may be disposed in the display 30.

### <Filter device>

The filter device may filter the air introduced through the inlet 24a through the filter 50. The filter device may flow the filtered air upward.

Referring to FIG. 3, the filter device includes a filter 50 that filters the air flowing into the inlet 24a, and a filter mounter that fixes the disposition of the filter 50 inside the case 10.

The filter 50 may have a cylindrical shape. Accordingly, the filter 50 may filter the air sucked from the front, rear, left, and right directions perpendicular to the up-down direction. The air introduced from the inlet 24a may flow into the inner space of the filter 50. The air passed through the filter 50 may flow to the blower 60 disposed in the upper side of the filter 50.

The filter mounter includes a lower plate 52 disposed in the lower side of the filter 50, an upper plate 54 disposed in the upper side of the filter 50, and a supporter connecting the lower plate 52 and the upper plate 54.

The lower plate 52 is disposed in the lower side of the filter 50. The lower plate 52 moves up and down, and may detect whether the filter 50 is disposed. A fan sterilizing device 53 that irradiates ultraviolet light upward may be disposed in the center of the lower plate 52. The fan sterilizing device 53 may sterilize the inside of a fan 62 described below or the filter 50.

An orifice 56 may be formed in the upper plate 54. The orifice 56 may be formed in the center of the upper plate 54. The orifice 56 may allow the air flowed into the inner side of the filter 50 to flow to the fan 62.

The inner circumferential end of the upper plate 54 has a shape bent upward, so that air flowing upward in the inner space of the filter 50 can be guided to the fan 62.

The supporter may connect the lower plate 52 and the upper plate 54. The supporter may be disposed to be spaced apart in the circumferential direction.

### <Blower>

The blower 60 includes a fan 62 that generates airflow inside the case 10, and a fan motor 64 that rotates the fan 62.

Referring to FIG. 3, the fan 62 may form a fan suction port in one side toward the orifice 56, and may form a fan discharge port in a direction opposite to the fan suction port. The fan 62 may be a mixed flow fan whose fan discharge outlet faces the centrifugal direction in the direction opposite to the fan suction port. The fan 62 may include a hub connected to the fan motor 64, a shroud that is disposed spaced apart from the hub by a certain distance and forms the fan suction port, and a blade extending in a radial direction to connect the hub and the shroud.

The fan 62 may operate to send air from the lower side upward. The fan 62 sucks air into the orifice 56 and discharges the air to the blower housing 68 where the diffuser 72 is disposed.

The fan motor 54 may be disposed above the fan 62.

The blower device includes a motor cover 66 that covers the outside of the fan motor 64, and a blower housing 68 that is disposed to be spaced radially outward from the motor cover 66 and guides the air flowing by the fan 62 upward.

A blowing flow path 70 through which air flowing by the fan 62 flows upward may be formed between the motor cover 66 and the blowing housing 68. The blowing flow path 70 may extend to an area where the humidifying module housing 410 and the flow path housing 430 are formed.

The suction grill 24 may be disposed in the outside of the blower housing 68.

The blower 60 includes a diffuser 72 that is disposed between the motor cover 66 and the blower housing 68 and reduces the rotational component of air flowing upward by the fan 62. A plurality of diffusers 72 may be disposed to be spaced apart in the circumferential direction.

A control box 74 may be disposed in the upper side of the motor cover 66 to form a space in which the circuit board 76 is disposed. The control box 74 may be disposed to be spaced apart from the inside of the blower housing 68. Therefore, the blowing flow path 70 may be formed in a space between the control box 74 and the blowing housing 68.

A plurality of circuit boards 76 may be disposed inside the control box 74.

### <Water tank and discharge flow path structure>

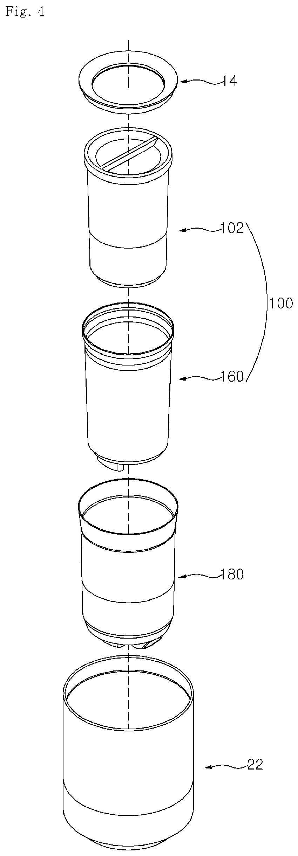

Hereinafter, with reference to FIGS. 4 to 8, the configuration of forming the discharge flow path of the present invention and the configuration of the water tank 100 for storing water will be described.

The humidifier includes a water tank 100 that forms a space for storing water, an inner shell 180 spaced apart from the outer circumference of the water tank 100, and an outer shell 22 spaced apart from the outer circumference of the inner shell 180. The humidifier includes a water tank cover 14 disposed in the upper side of the water tank 100.

The water tank 100 includes an inner water tank 102 that forms a space in which water is stored, and an outer water tank 160 disposed to cover the outside of the inner water tank 102. The inner water tank 102 may be disposed inside the outer water tank 160. When the inner water tank 102 is disposed inside the outer water tank 160, the outer circumferential surface of the inner water tank 102 may be disposed to be in contact with the inner circumferential surface of the outer water tank 160.

### <Inner water tank>

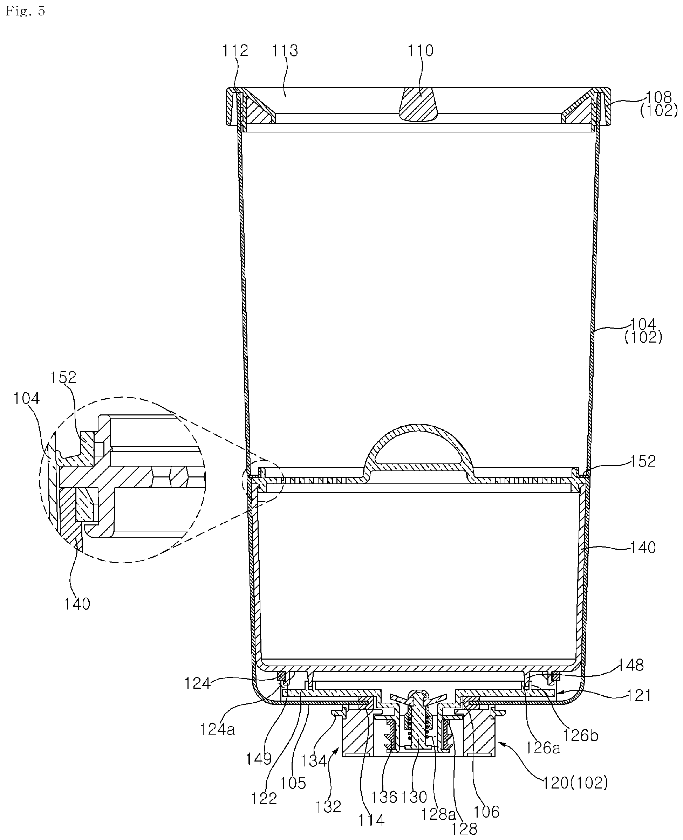

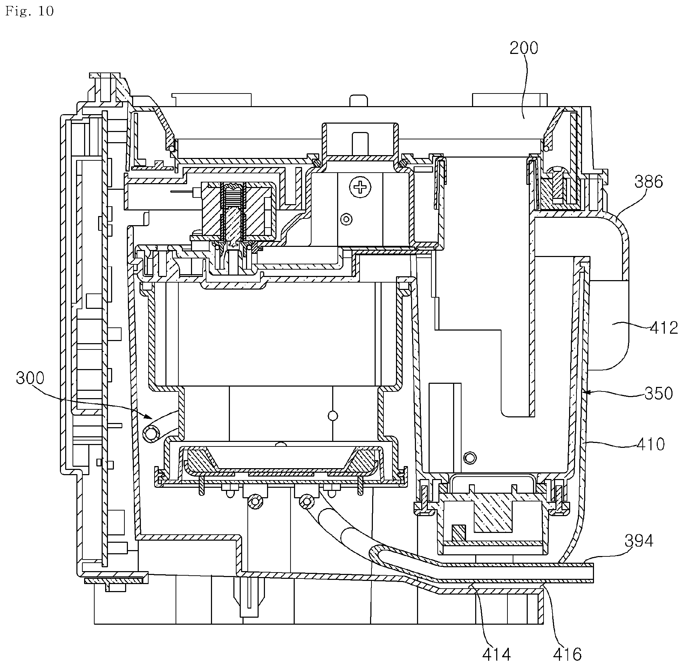

Referring to FIG. 5, the inner water tank 102 includes an inner water tank body 104 that forms a space in which water is stored, a handle 108 disposed in the upper side of the inner water tank body 104, and a connector 120 that is disposed in the lower side of the inner water tank body 104 and connects the inner water tank body 104 with a supply pipe 230 (see FIG. 10) described below.

Referring to FIG. 5, a water softener 140 is disposed inside the inner water tank 102 to harden the water inside the inner water tank 102. The water softener 140 includes a water softener housing 142 that forms a space in which an ion exchange resin filter (not shown) is disposed therein, and a housing cover 150 that covers the upper side of the water softener housing 142.

A plurality of cover holes 150b may be formed in the housing cover 150, and a plurality of housing holes (not shown) may be formed in the water softener housing 142.

The inner water tank body 104 may be formed in a substantially cylindrical shape. The inner water tank body 104 may have a shape having an open upper side. A lower hole 106 through which water stored in the lower surface is discharged may be formed in the inner water tank body 104. Referring to FIG. 5, the inner water tank body 104 may have a shape in which the inner diameter of the water tank decreases from the upper side to the lower side.

The lower hole 106 may be formed at the center of the lower surface of the inner water tank body 104. The connector 120 may be fixedly disposed in the lower hole 106. Water stored in the inner water tank 102 may flow to the supply pipe 230 through the connector 120 mounted in the lower hole 106.

The handle 108 includes a handle fixing portion 112 fixedly disposed in the upper end of the inner water tank body 104, and a handle bar 110 disposed across the upper side of the inner water tank body 104.

The handle fixing portion 112 may have a structure that hangs on the upper end of the inner water tank body 104. In the handle fixing portion 112, an area disposed inside the inner water tank body 104 may include an inclined wall 113 inclined to the inner and lower sides of the inner water tank body 104. Therefore, water falling through the water tank cover 14 may flow into the inner water tank 102 along the inclined surface of the handle fixing portion 112.

Referring to FIG. 5, the connector 120 includes a connector body 121 disposed to penetrate the lower hole 106 of the inner water tank body 104, a connector holder 132 that is coupled to the connector body 121 and fixes the arrangement of the connector body 121, and a connector valve 130 that is disposed inside the connector body 121 and opens and closes the internal flow path of the connector body 121.

Referring to FIG. 5, the connector body 121 includes a connector plate 122 disposed inside the inner water tank body 104, and a connector pipe 128 that is disposed to penetrate the lower hole 106 of the inner water tank body 104 and forms an internal flow path 128a in the inside. The connector plate 122 is disposed in the upper side of the lower surface of the inner water tank body 104.

The connector plate 122 may have a structure that fixes the arrangement of the water softener 140 by contacting the lower portion of the water softener 140. A fixing rib 126a, 126b protruding upward may be disposed in the connector plate 122.

Referring to FIG. 5, the fixing rib 126a, 126b may include a first fixing rib 126a and a second fixing rib 126b arranged to be radially spaced apart from the first fixing rib 126a. A lower protrusion 144 of the water softener 140 may be disposed in a space between the first fixing rib 126a and the second fixing rib 126b. The first fixing rib 126a and the second fixing rib 126b may prevent the water softener 140 disposed inside the inner water tank 102 from moving in a direction perpendicular to the up-down direction.

A border wall 124, which is disposed radially outward from the fixing rib 126a, 126b and protrudes upward, may be disposed in the connector plate 122. Referring to FIG. 5, a hook hole 124a into which a hook 145 of the water softener 140 is inserted may be formed in the border wall 124.

The connector pipe 128 may have a structure extending downward from the center of the connector plate 122. The connector pipe 128 is disposed to penetrate the lower hole 106 of the inner water tank body 104. The internal flow path 128a through which the water inside the inner water tank 102 flows may be formed inside the connector pipe 128. The connector valve 130 that opens and closes the internal flow path 128a is disposed inside the connector pipe 128.

The connector valve 130 may be disposed to move in the up-down direction inside the connector pipe 128. When connected to the supply pipe 230 described below, the connector valve 130 may move upward to open the internal flow path 128a.

The connector holder 132 is fixedly disposed in the outer circumference of the connector pipe 128. The connector holder 132 may be disposed in the lower side of the lower surface of the inner water tank body 104. Therefore, the connector holder 132 may be connected to the connector pipe 128 and fix the arrangement of the connector body 121.

Referring to FIG. 5, the inner water tank 102 may include a packing 114 mounted in the inner water tank body 104 forming the circumference of the lower hole 106. The packing 114 is made of a rubber material. The packing 114 may be disposed to contact the connector plate 122 in the upper side and contact the connector holder 132 in the lower side.

The packing 114 may prevent contact between the inner water tank body 104 and the connector body 121. The packing 114 may prevent contact between the inner water tank body 104 and the connector holder 132. The packing 114 may seal between the connector plate 122 and the lower wall 105 of the inner water tank body 104. In addition, the packing 114 may seal between the connector holder 132 and the lower wall 105 of the inner water tank body 104. That is, the packing 114 may doubly prevent water existing in the inner side of the inner water tank 102 from leaking through the outer side of the connector 120.

An inner sealer 136 may be disposed in the outer circumference of the connector pipe 128. The inner sealer 136 may seal a space between the connector 120 and the supply pipe 230.

An outer sealer 134 may be disposed in the outer circumference of the connector holder 132. The outer sealer 134 may be disposed to contact one side of the outer water tank 160 and/or the inner shell 180 which will be described below.

### <Water tank cover>

Referring to FIG. 4, the water tank cover 14 may be disposed in the upper side of the inner water tank 102. The water tank cover 14 may be disposed to be seated on the discharge grill 12. The water tank cover 14 may include a central cover 16 and a peripheral cover 18 disposed in the outer circumference of the central cover 16.

The peripheral cover 18 may be disposed in the upper side of the discharge grill 12, and may maintain the arrangement of the water tank cover 14. The peripheral cover 18 may have a ring-shaped structure. The peripheral cover 18 may have a structure that is inclined downward as it progresses inward in the radial direction. Therefore, when water is supplied to the upper portion, the water may flow toward the central cover 16.

The central cover 16 may have a shape that is convex upward. Therefore, when water is supplied to the upper side of the central cover 16, the water may flow in the direction of the outer circumference of the central cover 16. A water supply hole 20 for supplying water in the direction of the inner water tank 102 may be formed between the central cover 16 and the peripheral cover 18. The water supply hole 20 may flow to the upper side of the handle fixing portion 112 of the handle 108 of the inner water tank 102.

The water tank cover 14 may be disposed to be spaced upward from the inner water tank 102 and/or the outer water tank 160. Therefore, the force of water pressing the water tank cover 14 downward during the water supply process may not be delivered to the inner water tank 102 or the outer water tank 160.

### <Outer water tank>

The outer water tank 160 is disposed in the outer circumference of the inner water tank 102. The outer water tank 160 may be disposed in contact with the outer circumference of the inner water tank 102. Therefore, condensation water generated in the outer circumference of the inner water tank 102 may be minimized.

The upper end 162 of the outer water tank 160 may be formed to be spaced apart from the inner water tank 102. That is, the upper end 162 of the outer water tank 160 may be formed so that the rate of expansion in the radial direction increases as it progresses upward.

The outer water tank 160 may also have a cylindrical shape having an open upper side. A through hole 164 through which the connector 120 of the inner water tank 102 penetrates may be formed in the lower surface of the outer water tank 160. The through hole 164 is formed larger than the lower hole 106 of the inner water tank 102.

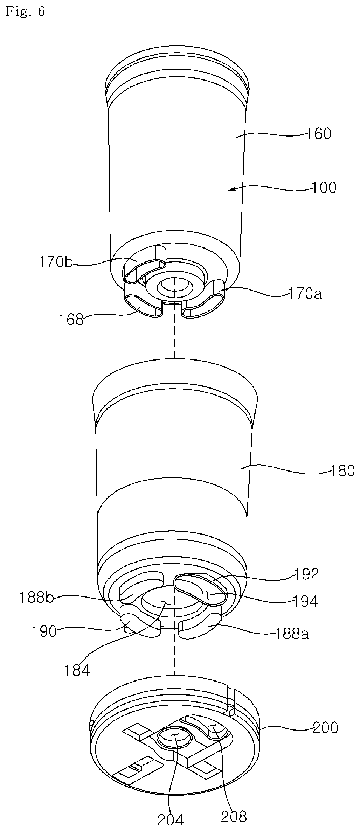

Referring to FIG. 6, in the lower surface of the outer water tank 160, a lower protrusion 166 protruding downward around the through hole 164, a pair of first water tank protrusions 170a, 170b protruding downward from the lower surface of the outer water tank 160, and a second water tank protrusion 168 protrudes downward from the lower surface of the outer water tank 160 may be disposed.

The lower protrusion 166 may be disposed around the through hole 164. The lower protrusion 166 may extend downward from the inner circumferential end of the lower surface of the outer water tank 160. The lower protrusion 166 may have a ring shaped structure. The outer sealer 134 may be disposed in contact with the inner circumferential surface of the lower protrusion 166.

Referring to FIG. 6, a pair of first water tank protrusions 170a, 170b may be disposed in opposite directions based on the through hole 164. A pair of first water tank protrusions 170a and 170b may transmit the load of the inner water tank 102 and the outer water tank 160 to a weight sensor 212a, 212b of middle tray 200 which will be described below. A pair of first water tank protrusions 170a, 170b may directly transmit the load of the inner water tank 102 and the outer water tank 160 to the weight sensor 212a, 212b, or may indirectly transmit through the inner shell 180.

The second water tank protrusion 168 may be disposed between the pair of first water tank protrusions 170a and 170b.

### <Inner shell>

The inner shell 180 is disposed to be spaced apart from the outer water tank 160. The inner shell 180 is disposed to be spaced apart from the water tank 100. A first discharge flow path 32 through which humidified air flows is formed between the inner shell 180 and the outer water tank 160.

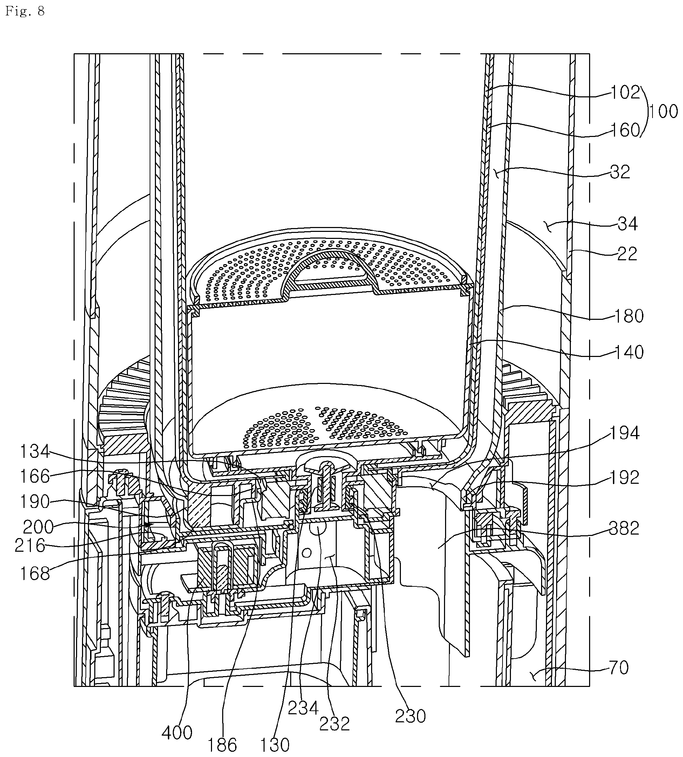

Referring to FIG. 8, the inner shell 180 is disposed to be spaced apart from the outer shell 22. The inner shell 180 may have a second discharge flow path 34 through which the filtered air flows between the outer shell 22 and the inner shell 180.

The inner shell 180 may have a cylindrical shape with an open upper side. The inner shell 180 may have a larger diameter than the outer water tank 160. The upper end of the inner shell 180 may be formed at a large radial expansion rate, similar to the upper end 162 of the outer water tank 160.

A shell through hole 184 is formed in the lower surface of the inner shell 180. The shell through hole 184 is disposed below the through hole 164 of the outer water tank 160. The connector 120 may be disposed in the shell through hole 184.

The inner shell 180 may be formed of a transparent material. Referring to FIG. 8, an upper protrusion 186 that protrudes upward from a portion where the shell through hole 184 is formed may be disposed in the inner shell 180. The upper protrusion 186 of the inner shell 180 may be disposed in contact with the lower protrusion 166 of the outer water tank 160.

The size of the shell through hole 184 of the inner shell 180 may be smaller than the size of the through hole 164 of the outer water tank 160. The upper protrusion 186 may be disposed inside the lower protrusion 166 of the outer water tank 160. That is, the outer circumferential surface of the upper protrusion 186 may be disposed to face the inner circumferential surface of the lower protrusion 166 of the outer water tank 160.

The outer sealer 134 may be disposed in the upper side of the upper protrusion 186.

A pair of first shell protrusions 188a and 188b in which the pair of first water tank protrusions 170a and 170b of the outer water tank 160 are mounted may be disposed in the inner shell 180. The pair of first shell protrusions 188a and 188b may have a structure that protrudes downward from the lower surface of the inner shell 180. Each of the pair of first shell protrusions 188a and 188b forms a space into which the pair of first water tank protrusions 170a and 170b are inserted.

Each of the pair of first shell protrusions 188a and 188b is disposed in the upper side of the weight sensor 212a, 212b disposed in the middle tray 200. Therefore, the pair of first shell protrusions 188a and 188b may transmit the loads of the inner water tank 102 and the outer water tank 160 to the weight sensor 212a, 212b.

A second shell protrusion 190 on which the second water tank protrusion 168 of the outer water tank 160 is mounted may be disposed in the inner shell 180. The second shell protrusion 190 may form a space into which the second water tank protrusion 168 is inserted.

Referring to FIG. 8, an exhaust connection pipe 192 is disposed in the inner shell 180 to guide humidified air discharged from the second humidifying water tank 350 to the first discharge flow path 32. The exhaust connection pipe 192 has a structure extending downward from the lower surface of the inner shell 180. The exhaust connection pipe 192 may have a shape corresponding to an exhaust pipe 382 described below. The exhaust connection pipe 192 may have an approximate oval shape.

Referring to FIG. 8, the lower end of the exhaust connection pipe 192 may be connected to the upper end of the exhaust pipe 382. The lower end of the exhaust connection pipe 192 may be disposed inside the upper end of the exhaust pipe 382. The lower end of the connection pipe 192 may be formed to have a step for protruding into the inside of the exhaust pipe 382. An exhaust pipe connection hole 194 opened downward is formed at the lower end of the exhaust connection pipe 192.

### <Middle tray>

The humidifier includes a middle tray 200 that distinguishes between an area where the water tank 100 is disposed and an area where the humidifying module is disposed. The middle tray 200 may detect the level of water stored in the water tank 100. The middle tray 200 may irradiate light to the discharged humidified air.

Referring to FIG. 6, the middle tray 200 is disposed in the lower side of the water tank 100. The middle tray 200 is disposed in the upper side of the second humidifying water tank 350 or the first humidifying water tank 300 which will be described below. The weight sensor 212a, 212b that detects the water level of the water tank 100 by weight may be disposed in the middle tray 200.

Referring to FIG. 8, a lamp 216 that irradiates light toward the first discharge flow path 32 may be disposed in the middle tray 200. The inner shell 180 may be seated on the middle tray 200. The middle tray 200 may be equipped with an inner water tank 102 and an outer water tank 160.

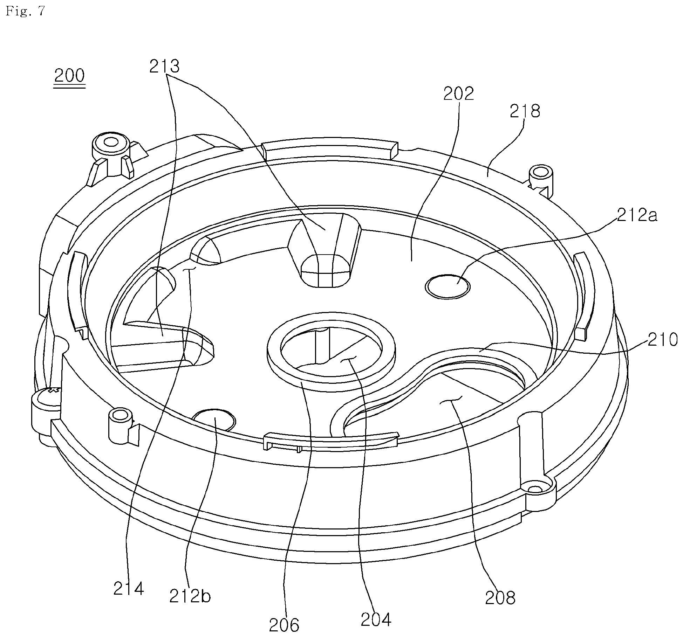

Referring to FIG. 7, the middle tray 200 includes a tray plate 202 and a lamp housing 218 that is disposed around the outer circumference of the tray plate 202 and has a lamp 216 disposed therein.

A first hole 204 through which the supply pipe 230 passes is formed in one side of the tray plate 202. The first hole 204 may be formed at the center of the tray plate 202. A portion of the supply pipe 230 is disposed upstream of the first hole 204. The connector 120 of the inner water tank 102 may be connected to the supply pipe 230 disposed in the upper side of the first hole 204.

Referring to FIG. 7, a first flange 206 protruding toward the upper side of the tray plate 202 is disposed around the first hole 204. Therefore, water flowing into the upper side of the tray plate 202 may be prevented from flowing to the lower side of the middle tray 200.

A second hole 208 through which the humidified air discharged from the second humidifying water tank 350 flows is formed in the other side of the tray plate 202. A second flange 210 protruding upward from the tray plate 202 is disposed around the second hole 208. The second flange 210 may prevent water flowing into the upper side of the tray plate 202 from flowing to the lower side of the middle tray 200 through the second hole 208.

The lamp housing 218 is disposed along the circumference of the tray plate 202. The lamp housing 218 may be formed in a ring shape. The lamp 216 that irradiates light upward may be disposed inside the lamp housing 218. One side of the lamp housing 218 may be formed of a material that transmits light emitted from the lamp 216.

The middle tray 200 may be disposed to cover the upper sides of the first humidifying water tank 300 and the second humidifying water tank 350. The middle tray 200 may be coupled with the humidifying module housing 410 described below to form a space in which the first humidifying water tank 300 and the second humidifying water tank 350 are disposed.

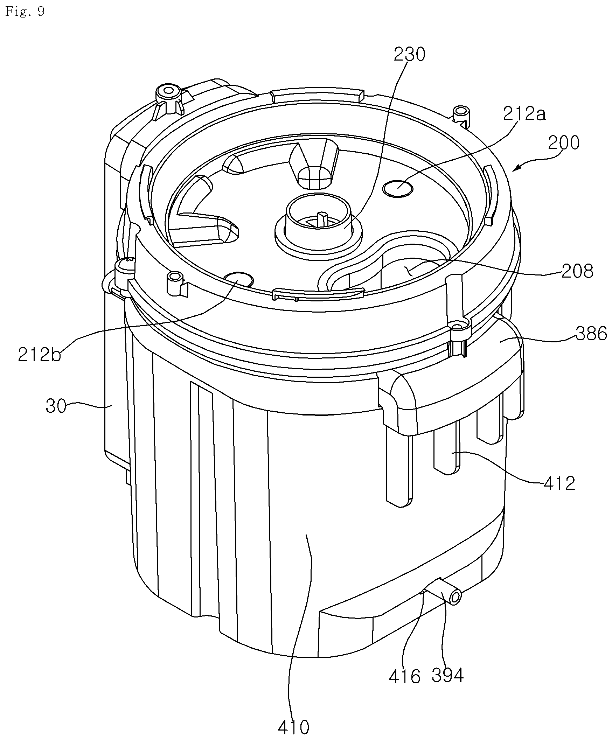

Hereinafter, the humidifying module housing and the middle tray will be described with reference to FIGS. 9 to 10.

### <Humidifying module housing and Middle tray>

Referring to FIG. 9, the humidifier includes a humidifying module housing 410 that forms a space in which the first humidifying water tank 300 and the second humidifying water tank 350 are disposed, and a middle tray 200 disposed in the upper side of the humidifying module housing 410.

Referring to FIG. 10, a space in which the first humidifying water tank 300 and the second humidifying water tank 350 are disposed is formed between the humidifying module housing 410 and the middle tray 200. The humidifying module housing 410 may form a space in which the first humidifying water tank 300 and the second humidifying water tank 350 are disposed and may have a shape having an open upper side. The middle tray 200 may be disposed to cover the opened upper side of the humidifying module housing 410.

### <Humidifying module housing>

Referring to FIG. 10, inside the space formed by the humidification module housing 410, a first humidifying water tank 300 for heating water, a second humidifying water tank 350 that is connected to the first humidifying water tank 300 and generates humidified air by using heated water, and a supply pipe 230 that supplies water to the first humidifying water tank 300 may be disposed. The exhaust pipe 382 for sending humidified air generated in the second humidifying water tank 350 to the first discharge flow path 32 may be disposed inside a space formed by the humidifying module housing 410. The exhaust pipe 382 may send the humidified air generated in the second humidifying water tank 350 and/or the humidified air generated in the first humidifying water tank 300 to the upper side of the middle tray 200.

Referring to FIGS. 9 to 10, an air guide cover 386 is disposed in one side of the circumferential surface of the humidifying module housing 410. The air guide cover 386 may have a structure that protrudes outward from one side of the circumferential surface of the humidifying module housing 410.

A plurality of air guide ribs 412 that extend in the up-down direction and are spaced apart in a direction perpendicular to the up-down direction are disposed in the circumferential surface of the humidifying module housing 410. The air guide rib 412 is disposed in the lower side of the air guide cover 386.

Referring to FIG. 10, a drain pipe hole 416 through which a drain pipe 394 passes is formed in the other side of the circumferential surface of the humidifying module housing 410. A drain pipe groove 414, which is recessed downward in an area where the drain pipe 394 is disposed, is formed in the lower surface of the humidifying module housing 410. A drain pipe 394 may be mounted in the drain pipe groove 414.

The air guide cover 386 is disposed to protrude to one side of the circumferential surface of the humidifying module housing 410. The air guide rib 412 is disposed below the air guide cover 386 of the humidifying module housing 410.

Referring to FIG. 10, the display 30 is disposed in the circumferential surface of the humidifying module housing 410. The display 30 is disposed in the opposite direction where the air guide cover 386 protrudes.

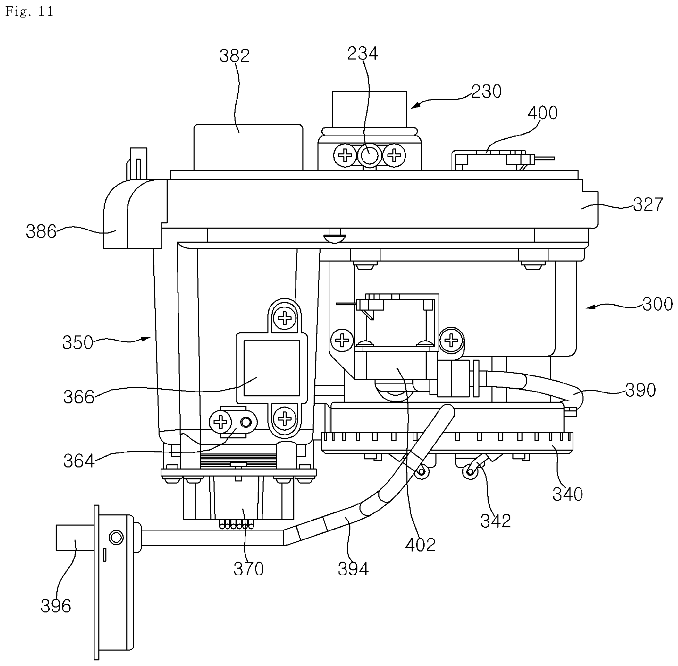

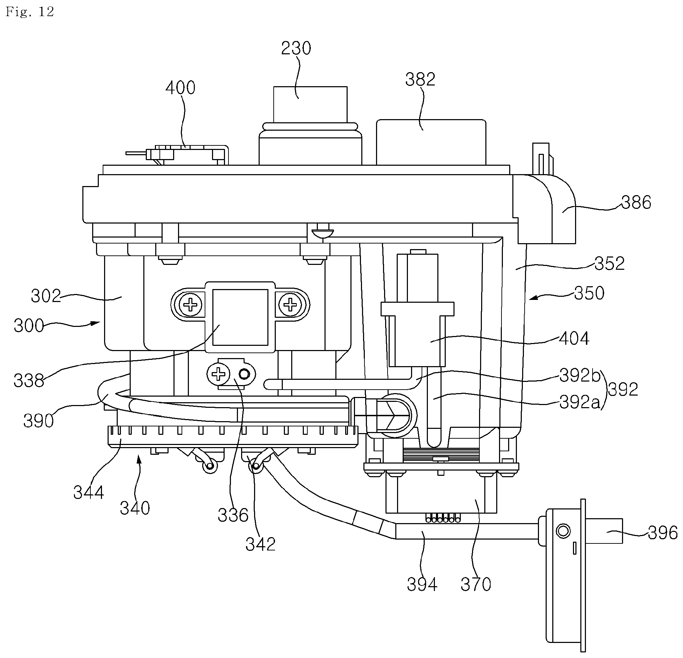

Referring to FIGS. 11 and 12, a drain valve 396 for opening and closing the drain pipe 394 is disposed at the distal end of the drain pipe 394. The drain valve 396 may open and close the drain pipe 394 depending on its arrangement.

The humidifying module housing 410 may have a display 30 mounted on the other side of the circumferential surface.

### <Middle tray>

The middle tray 200 is disposed in the upper sides of the first humidifying water tank 300 and the second humidifying water tank 350. The middle tray 200 is disposed in the open upper side of the humidifying module housing 410. The middle tray 200 may cover the open upper side of the humidifying module housing 410.

The water tank 100 may be mounted in the upper side of the middle tray 200. The water tank 100 and the inner shell 180 may be disposed in the upper side of the middle tray 200. Referring to FIG. 9, the weight sensor 212a, 212b that detects the water level of the water tank 100 may be disposed in the upper surface of the middle tray 200.

In one side of the upper surface of the middle tray 200, a second hole 208 may be formed to allow humidified air discharged from the second humidifying water tank 350 to flow. Some components of the supply pipe 230 may penetrate the first hole 204 formed in the middle tray 200 and protrude toward the upper side of the middle tray 200.

A mounting protrusion 213 protruding upward may be disposed in the upper surface of the middle tray 200 to maintain the disposition of the second shell protrusion 190 of the inner shell 180. The mounting protrusion 213 is disposed around a fixing groove 214 where the second shell protrusion 190 is disposed.

Between the middle tray 200 and the humidifying module housing 410, a peripheral wall 327 of a second upper cover 326 described below may be disposed to be exposed.

Referring to FIG. 10, the middle tray 200 is disposed in the upper side of the humidifying module housing 410. The middle tray 200 may be disposed to cover the upper side of the humidifying module housing 410. Therefore, the middle tray 200 may distinguish between an area where humidified air is generated and an area where the humidified air flows to be discharged.

The configuration of the supply pipe, the first humidifying water tank, the second humidifying water tank, and the exhaust pipe will be described with reference to FIGS. 10 to 16.

The humidifier of the present invention may include a humidifying module that heats water and generates humidified air. The humidifying module may include a first humidifying water tank 300 that heats water and a second humidifying water tank 350 that generates humidified air by using a vibrator 370.

The humidifier may include a first connection pipe 390 and a second connection pipe 392 that connect the first humidifying water tank 300 and the second humidifying water tank 350. The first connection pipe 390 may supply water heated in the first humidifying water tank 300 to the second humidifying water tank 350.

Referring to FIG. 11, a second valve 402 is disposed in the first connection pipe 390. The second valve 402 may open and close the internal flow path of the first connection pipe 390, so that water heated in the first humidifying water tank 300 may be supplied to the second humidifying water tank 350.

The first humidifying water tank 300 and the second humidifying water tank 350 may be connected through a communication pipe 310 disposed above the first connection pipe 390.

Water heated in the first humidifying water tank 300 may be supplied to the second humidifying water tank 350 through the first connection pipe 390. The humidified air generated in the first humidifying water tank 300 may flow into the second humidifying water tank 350 through the communication pipe 310.

Referring to FIG. 12, a pump 404 is disposed in the second connection pipe 392. When the pump 404 operates, water in the second humidifying water tank 350 flows to the first humidifying water tank 300.

The humidifier includes a first temperature sensor 336 that detects the temperature of the water stored inside the first humidifying water tank 300, and a first water level sensor 338 that detects the level of water stored inside the first humidifying water tank 300. Referring to FIG. 12, the first temperature sensor 336 and the first water level sensor 338 are disposed in one side of the first humidifying water tank 300.

The humidifier includes a second temperature sensor 364 that detects the temperature of the water stored inside the second humidifying water tank 350, and a second water level sensor 366 that detects the level of water stored in the second humidifying water tank 350. Referring to FIG. 11, the second temperature sensor 364 and the second water level sensor 366 are disposed in one side of the second humidifying water tank 350.

The humidifier includes a detection sensor 234 that detects the quality of water existing in the supply pipe 230. Referring to FIG. 11, the detection sensor 234 is disposed in one side of the supply pipe 230. The detection sensor 234 may detect the quality of the water flowing from the water tank 100. The detection sensor 234 may detect the replacement timing of the water softener 140 disposed in the water tank 100 by detecting the water quality.

### <Supply pipe>

The humidifier of the present invention includes a supply pipe 230 that supplies water stored in the water tank 100 to the first humidifying water tank 300. The supply pipe 230 is disposed between the water tank 100 and the first humidifying water tank 300. The supply pipe 230 may temporarily store water that is discharged from the water tank 100 and supplied to the first humidifying water tank 300.

A supply chamber 232 in which water is temporarily stored may be formed in the supply pipe 230. A detection sensor 234 for detecting the hardness of the water stored inside may be disposed in one side of the supply pipe 230.

A plurality of components may be coupled to form the supply pipe 230. Referring to FIG. 10, the supply pipe 230 may be formed by coupling a first upper cover 322 and a supply pipe cover 231. The supply pipe cover 231 may have a structure that is disposed in the upper side of the first upper cover 322 and forms a supply chamber 232 therein by coupling with the first upper cover 322. Unlike the drawing, it is also possible that the supply pipe is formed as a single structure.

The supply pipe 230 includes an upper supply pipe 230a connected to the connector 120, a middle supply pipe 230b extending to the lower side of the upper supply pipe 230a, and a lower supply pipe 230c extending from the lower portion of the middle supply pipe 230b in a direction perpendicular to the up-down direction.

The upper supply pipe 230a may be disposed above the middle tray 200. The upper supply pipe 230a may have a structure that penetrates the first hole 204 of the middle tray 200 and extends upwardly. The middle supply pipe 230b extends to the lower side of the upper supply pipe 230a and may have a cylindrical shape. The diameter of the middle supply pipe 230b may be larger than the diameter of the upper supply pipe 230a.

The lower supply pipe 230c may extend in a direction perpendicular to the up-down direction from one side of the middle supply pipe 230b. The lower supply pipe 230c may form the supply chamber 232 together with the first upper cover 322 disposed in the upper side of the first humidifying water tank 300 disposed below.

The lower supply pipe 230c may be formed between the supply pipe cover 231 and the first upper cover 322. The first upper cover 322 has a chamber groove 324 recessed downward in the area forming the lower supply pipe 230c.

A first valve 400 is disposed at the distal end of the lower supply pipe 230c. The flow path formed by the supply pipe cover 231 and the first upper cover 322 may have a narrow flow path shape, and has a distal end in which the first valve 400 is disposed.

Depending on the disposition of the first valve 400, the flow path formed at the distal end of the supply pipe 230 may be opened or closed. The first valve 400 may supply water from the supply pipe 230 to the first humidifying water tank wall 302 or stop supplying water.

The first valve 400 may be disposed in the upper side of the first humidifying water tank 300 to supply water existing in the supply pipe 230 to the first humidifying water tank 300 or to stop supplying water.

A first supply hole 325 may be formed in the first upper cover 322. Water existing in the supply chamber 232 may flow toward the first humidifying water tank 300 through the first supply hole 325. The first valve 400 may supply water stored in the supply chamber 232 to the first humidifying water tank 300 by opening and closing the first supply hole 325.

The detection sensor 234 is disposed in the supply pipe 230 to detect the quality of water existing inside the supply chamber 232. The detection sensor 234 is disposed in one side of the middle supply pipe 230b. The detection sensor 234 may be disposed in the upper portion of the middle supply pipe 230b.

Referring to FIG. 10, the detection sensor 234 is disposed in the upper side of the middle supply pipe 230b, and may quickly detect the quality of water supplied from the water tank 100. That is, when the water existing in the supply chamber 232 falls and the water in the water tank 100 flows in, the detection sensor 234 may detect the quality of the water flowing in from the water tank 100.

### <First humidifying tank>

The first humidifying water tank 300 has a first chamber 300a forming a space in which water is stored and the water is heated.

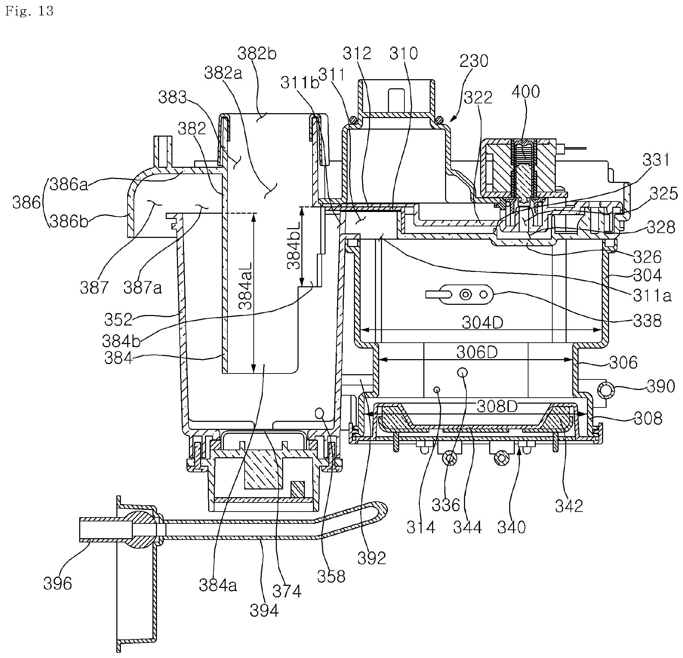

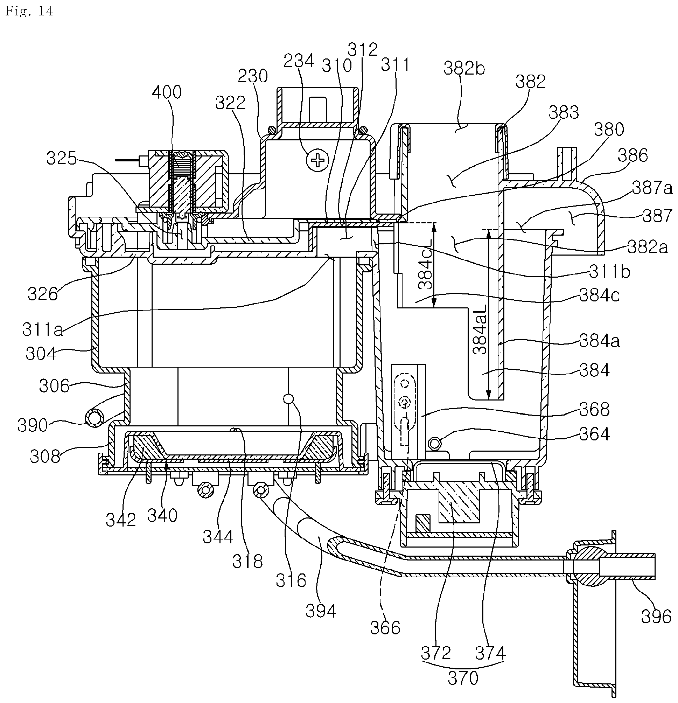

Referring to FIGS. 13 and 14, the first humidifying water tank 300 may include a first humidifying water tank wall 302 forming the first chamber 300a, and a heater 340 that is disposed in the lower side of the first humidifying water tank wall 302 and heats the water inside the first humidifying water tank wall 302.

The first humidifying water tank wall 302 may have a cylindrical shape in which water is stored. The first humidifying water tank wall 302 may have an open lower side, and a heater 340 may be disposed in the lower side of the first humidifying water tank wall 302.

Referring to FIGS. 13 and 14, the first humidifying water tank wall 302 may include a lower water tank wall 308, a middle water tank wall 306, and an upper water tank wall 304. The lower water tank wall 308, the middle water tank wall 306, and the upper water tank wall 304 may be disposed side by side from the lower side to the upper side.

The heater 340 may be disposed on the lower water tank wall 308. The heater 340 may be disposed to protrude inside the lower water tank wall 308. However, the heater 340 may be disposed to be spaced radially inward from the inner circumferential surface of the lower water tank wall 308. The lower water tank wall 308 may be disposed to be spaced apart from the heater 340 disposed inside at a certain distance. A drain hole 318 is formed in one side of the lower water tank wall 308.

Referring to FIGS. 13 and 14, the heater 340 may include a heating element 342 that receives electricity to generate heat, and a heating plate 344 disposed in contact with the heating element 342. The heating element 342 may be formed in a ring shape having one side open. The heating element 342 may be disposed inside the lower water tank wall 308.

The heating plate 344 is disposed in the upper side of the heating element 342 and transmits the heat generated by the heating element 342 to the water inside the first humidifying water tank 300. The heating plate 344 may be disposed to cover the heating element 342. Some components of the heating plate 344 may be disposed to protrude inside the lower water tank wall 308 to cover the heating element 342. The heating plate 344 disposed inside the lower water tank wall 308 may be disposed to be spaced apart from the inner circumferential surface of the lower water tank wall 308.

Referring to FIG. 13, the middle water tank wall 306 is disposed in the upper side of the lower water tank wall 308. The diameter 306D of the middle water tank wall 306 is larger than the diameter 308D of the lower water tank wall 308. The diameter 306D of the middle water tank wall 306 may be smaller than the diameter 304D of the upper water tank wall 304.

The middle water tank wall 306 is formed to have a small diameter, thereby forming a space where the second valve 402 is disposed inside the humidifying module housing 410. The middle water tank wall 306 is formed to have a small diameter, thereby forming a space where the connection pipe 390 is disposed inside the humidifying module housing 410.

Referring to FIGS. 12 and 13, the first temperature sensor 336 is disposed in one side of the middle water tank wall 306. In one side of the middle water tank wall 306, a recovery inlet hole 314 through which water flows in from the second connection pipe 392 is formed. An outlet hole 316 through which water flows out to the first connection pipe 390 may be formed in one side of the middle water tank wall 306.

The outlet hole 316 may be disposed at a higher position than the recovery inlet hole 314. The first temperature sensor 336 may be disposed at a higher position than the recovery inlet hole 314. The outlet hole 316 may be disposed at the same as or higher position than the first temperature sensor 336.

Therefore, the first temperature sensor 336 may detect the temperature that is varied as the water supplied to the first humidifying water tank 300 is heated. In addition, the first temperature sensor 336 may detect the temperature of water stored in the first chamber 300a of the first humidifying water tank 300 after a portion of the water stored inside the first humidifying water tank 300 is supplied to the second humidifying water tank 350.

The first temperature sensor 336 may detect the temperature change inside the first humidifying water tank 300. The first temperature sensor 336 may detect abnormal operation of the heater 340 inside the first humidifying water tank 300.

The upper water tank wall 304 may extend to the upper side of the middle water tank wall 306. The diameter 304D of the upper water tank wall 304 may be larger than the diameter of the middle water tank wall 306. The length of the upper water tank wall 304 extending in the up-down direction may be longer than the length of the middle water tank wall 306 extending in the up-down direction. The size of the internal space formed by the upper water tank wall 304 may be larger than the size of the internal space formed by the middle water tank wall 306 and the lower water tank wall 308.

Referring to FIGS. 12 and 13, a first water level sensor 338 is disposed in one side of the upper water tank wall 304. The first water level sensor 338 is disposed above the first temperature sensor 336. The first water level sensor 338 may detect the water level inside the first humidifying water tank 300. The first water level sensor 338 may detect a normal water level of the heating water tank.

Here, the normal water level of the first humidifying water tank 300 may mean an area between an upper end where the water supplied to the first humidifying water tank 300 does not exceed a set water level, and a lower end which is a minimum level where water must exist to operate the heater 340.

The first humidifying water tank 300 may include an upper cover 322, 324 disposed in the upper side of the first humidifying water tank wall 302. The upper cover 322, 324 is disposed in the upper side of the upper water tank wall 304.

The upper cover 322, 324 may be disposed to cover at least a portion of the upper side of the first humidifying water tank wall 302. The upper cover 322, 324 may include the first upper cover 322 and the second upper cover 326 disposed in the lower side of the first upper cover 322.

Referring to FIGS. 13 and 14, the first upper cover 322 is disposed in the upper side of the second upper cover 326. The first upper cover 322 may partition the first humidifying water tank wall 302 and the supply pipe 230. The first upper cover 322 may form one side of the supply chamber 232 that forms the inside of the supply pipe 230.

Referring to FIGS. 13 and 14, the first upper cover 322 has a first supply hole 325 through which the water stored in the supply chamber 232 flows. The first valve 400 may be disposed in the upper side of the first supply hole 325, and may open and close the first supply hole 325. The first upper cover 322 may be disposed to be spaced upward from the upper end of the upper water tank wall 304.

The first upper cover 322 may have a structure connected to the exhaust pipe 382 described below. The first upper cover 322 may be formed as one body with the exhaust pipe 382. The first upper cover 322 may have a smaller area than the second upper cover 326.

The first upper cover 322 may be disposed to be spaced apart from the second upper cover 326. That is, the first upper cover 322 may be disposed upward to be spaced apart from the second upper cover 326.

A portion of the first upper cover 322 may form a portion of the supply pipe 230. The first upper cover 322 may form a chamber groove 324 that is recessed downward in the area forming the supply pipe 230.

Referring to FIGS. 13 and 14, the second upper cover 326 may be disposed to cover the first supply hole 325 formed in the first upper cover 322. A second supply hole 330 may be formed in the second upper cover 326 to send water flowing through the first supply hole 325 to the first humidifying water tank 300. The second supply hole 330 is disposed to be spaced apart from the first supply hole 325 in a direction perpendicular to the up-down direction.

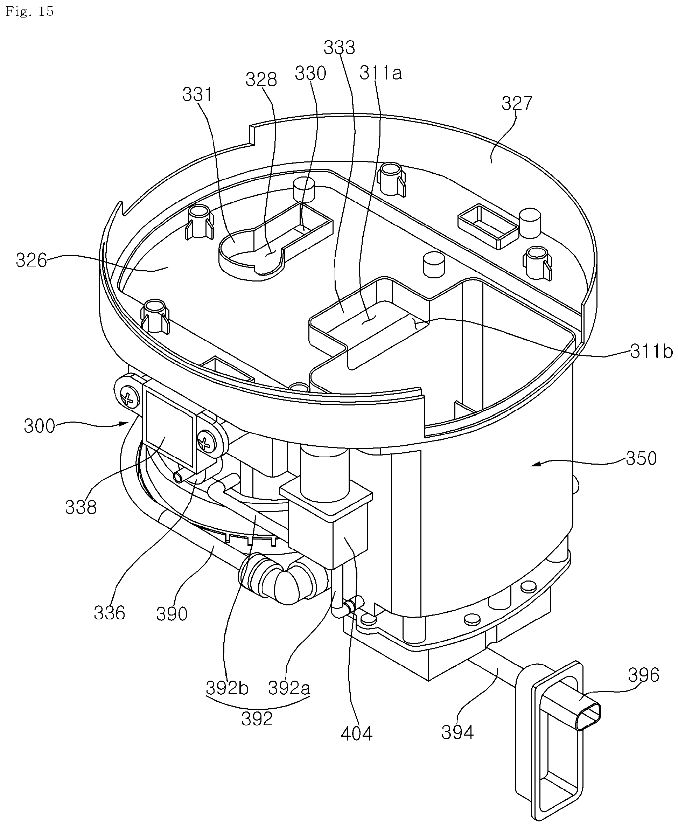

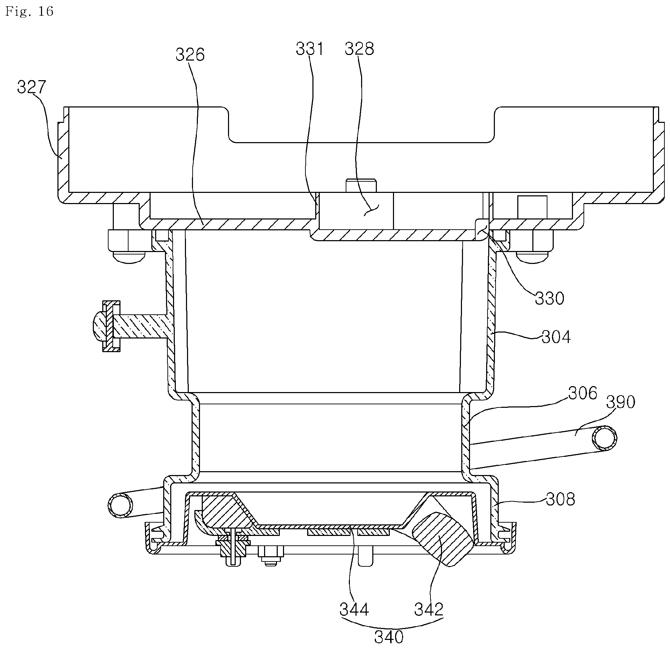

Referring to FIGS. 15 and 16, a supply flow path 328 may be formed between the second upper cover 326 and the first upper cover 322, so that water flowing into the first supply hole 325 flows to the second supply hole 330. A supply flow path rib 331 protruding upward may be disposed in the second upper cover 326 to form a supply flow path 328. The supply flow path rib 331 may protrude toward the upper side of the second upper cover 326 and may be disposed in contact with the lower surface of the first upper cover 322.

The direction in which the supply flow path 328 extends may have a structure that extends in a direction different from the direction in which the chamber groove 324 extends. In one embodiment, the direction in which the supply flow path 328 extends may be formed perpendicular to the direction in which the chamber groove 324 extends.

Referring to FIG. 16, the second supply hole 330 may be formed in the area where the peripheral wall of the first humidifying water tank 300 is located. Therefore, when the water flowing in the supply flow path 328 flows into the first humidifying water tank 300 through the second supply hole 330, it may flow downward along the circumferential wall of the first humidifying water tank 300. This can improve the noise of falling water supplied to the first humidifying water tank 300.

Referring to FIGS. 13 and 14, a first communication hole 311a is formed in the second upper cover 326. The first communication hole 311a may connect the first humidifying water tank 300 and the second humidifying water tank 350. That is, humidified air generated in the first humidifying water tank 300 may flow to the second humidifying water tank 350 through the first communication hole 311a.

The first communication hole 311a may have a structure that is opened in the up-down direction. Therefore, the humidified air generated by the heater 340 inside the first humidifying water tank 300 flows upward through the first communication hole 311a.

The second upper cover 326 may include an upper rib 333 extending upward around the first communication hole 311a. The upper rib 333 may have a structure that protrudes upward around the second upper cover 326 where the first communication hole 311a is formed.

An upper cover 312 may be disposed in the upper side of the second upper cover 326. The upper cover 312 may have a structure connected to the upper rib 333. The upper cover 312, together with the upper rib 333, may form a communication flow path 311 therein.

The communication flow path 311 may connect the first communication hole 311a formed in the first humidifying water tank 300 and the second communication hole 311b formed in the second humidifying water tank 350. The communication flow path 311 may be disposed in the upper side of the first humidifying water tank 300. Therefore, the humidified air that is generated in the first humidifying water tank 300 to rise may flow to the communication flow path 311 through the first communication hole 311a.

The communication flow path 311 may be formed by the upper rib 333 of the second upper cover 326 and the upper cover 312. The communication flow path 311 extends in a direction horizontal to the second communication hole 311b.

### <Second humidifying tank>

A second chamber 350a is formed inside the second humidifying water tank 350 to store water and atomize the water.

Referring to FIGS. 13 and 14, the second humidifying water tank 350 includes a second humidifying water tank wall 352 forming the second chamber 350a, and the vibrator 370 that is disposed in the lower side of the second humidifying water tank wall 352 and vibrates to atomize the water inside the second humidifying water tank wall 352.

The second humidifying water tank wall 352 may have a pillar shape forming a space therein. The vibrator 370 is disposed in the lower side of the second humidifying water tank wall 352. The second humidifying water tank wall 352 may have a shape in which the cross-sectional area formed in the horizontal direction increases as it progresses toward the upper side.

The upper end of the second humidifying water tank wall 352 may be formed to be higher than the upper end of the first humidifying water tank wall 302.

The vibrator 370 is disposed in the lower surface of the second humidifying water tank wall 352. Referring to FIG. 13, an inlet hole 358 through which water of the first humidifying water tank wall 302 flows in may be formed in one side of the second humidifying water tank wall 352. In one side of the second humidifying water tank wall 352, a recovery discharge hole 360 through which water stored inside the second humidifying water tank 350 flows into the first humidifying water tank 300 may be formed.

The inlet hole 358 may be formed in a lower position than the outlet hole 316 formed in the first humidifying water tank wall 302. The recovery discharge hole 360 may be formed in a lower position than the inlet hole 358.

Referring to FIG. 13, the vibrator 370 may be disposed in the lower surface of the second humidifying water tank 350. In one side of the second humidifying water tank wall 352, a recovery groove 361 forming a space in the circumferential direction is formed in an area where the recovery discharge hole 360 is formed. The recovery groove 361 may be formed in one side of the vibrator 370. That is, the recovery groove 361 is formed in one side of the vibrator 370 disposed in the lower surface of the second humidifying water tank 350. That is, the recovery groove 361 may form a space at the lower end of the inner side of the second humidifying water tank wall 352.

The recovery discharge hole 360 is formed at a lower position than the recovery inlet hole 314 formed in the first humidifying water tank wall 302.

Referring to FIG. 14, a second temperature sensor 364 is disposed in one side of the circumferential surface of the second humidifying water tank 350. The second temperature sensor 364 is disposed at a higher position than the recovery discharge hole 360. The second temperature sensor 364 may be disposed at a position lower than or equal to the inlet hole 358.

The second temperature sensor 364 may detect the temperature of the water supplied into the second humidifying water tank 350. Therefore, the second temperature sensor 364 may detect whether water of a set temperature or higher is supplied into the second humidifying water tank 350.

Referring to FIGS. 11 and 14, the second water level sensor 366 is disposed in one side of the peripheral wall of the second humidifying water tank 350. The second water level sensor 366 detects the level of water existing inside the second humidifying water tank 350. The second water level sensor 366 may detect a lowest water level inside the second humidifying water tank 350 at which the vibrator 370 can operate. In addition, the second water level sensor 366 may detect the amount of water stored inside the second humidifying water tank 350. The second water level sensor 366 may detect an optimal water level for the operation of vibrator 370.

Referring to FIG. 14, a water level sensor cover 368 may be disposed inside the second humidifying water tank 350. The water level sensor cover 368 may be disposed at a certain distance from the second water level sensor 366. The water level sensor cover 368 may be disposed between the second water level sensor 366 and the vibrator 370. The water level sensor cover 368 may have a structure that protrudes upward from the lower surface of the second humidifying water tank 350.

Even if the water level inside the second humidifying water tank 350 is varied due to the vibrator 370, the second water level sensor 366 can detect the water level more accurately by using the water level sensor cover 368.

A second communication hole 311b is formed at the upper end of the peripheral wall of the second humidifying water tank 350. The second communication hole 311b is formed at the upper end of the peripheral wall of the second humidifying water tank 350. The communication hole 311b is open in the direction in which the first humidifying water tank 300 is disposed.

Referring to FIGS. 13 and 14, the second communication hole 311b is connected to the communication flow path 311. The second communication hole 311b is opened in the horizontal direction.

Two vibrators 370 may be disposed in the lower surface of the second humidifying water tank 350. Two vibrators 370 may be disposed to be spaced apart from each other in a direction perpendicular to the up-down direction.

The vibrator 370 includes a vibrating element 372 that generates vibration, and a vibrating element cover 374 disposed in the upper side of the vibrating element 372. The vibrating element cover 374 is disposed to contact the water stored inside the second humidifying water tank 350. The vibrating element cover 374 transmits the vibration generated in the vibrating element 372 to the water stored inside the second humidifying water tank 350.

The vibrator 370 generates humidified air by using water stored in the second humidifying water tank 350.

Referring to FIGS. 13 and 14, the second humidifying water tank 350 includes a humidifying water tank cover 380 disposed in the upper side of the second humidifying water tank wall 352. The humidifying water tank cover 380 may supply humidified air generated in the second humidifying water tank 350 to the first discharge flow path 32.

The humidifying water tank cover 380 includes an exhaust pipe 382 that sends humidified air upward. The exhaust pipe 382 may have a structure extending upward from the humidifying water tank cover 380. The exhaust pipe 382 has a roughly oval pillar shape.

Referring to FIGS. 13 and 14, the exhaust pipe 382 is disposed in the upper side of a pair of vibrators 370. Therefore, humidified air generated in the vibrator 370 may quickly flow to the exhaust pipe 382. In addition, when the water stored in the second chamber 350a of the second humidifying water tank 350 is splashed upward by the vibrator 370, it may move into the exhaust pipe 382.

The upper end of the exhaust pipe 382 may be disposed in contact with the middle tray 200 (see FIG. 8). Here, the upper end of the exhaust pipe 382 may be in direct contact with the middle tray 200, or may be disposed in indirect contact through a separate sealing member 388.

An exhaust pipe inlet 382a (or exhaust hole) is formed at the lower end of the exhaust pipe 382. An exhaust pipe outlet 382b is formed at the upper end of the exhaust pipe 382. The exhaust pipe 382 may have an exhaust pipe flow path 383 formed between the exhaust pipe inlet 382a and the exhaust pipe outlet 382b.

An air supply hole 387 is formed in one side of the humidifying water tank cover 380. External air may flow into the second humidifying water tank 350 through the air supply hole 387. The air supply hole 387 may have a shape that is opened upward.

The humidifying water tank cover 380 includes an air guide cover 386 that supplies air flowing through the blowing flow path 70 to the second humidifying water tank 350. The air guide cover 386 allows a portion of the air flowing to the outside of the humidifying module housing 410 to flow to the inside of the second humidifying water tank 350 through the air supply hole 387.

The air guide cover 386 may guide air flowing to the outside of the second humidifying water tank 350 to flow to the inside of the second humidifying water tank 350.

The air guide cover 386 may have a structure that is disposed to be spaced upward from the air supply hole 387, and extends in a horizontal direction from the exhaust pipe 382. The air guide cover 386 extends from the peripheral wall of the exhaust pipe 382, and may be disposed at a position spaced upward from the upper end of the second humidifying water tank wall 352.

Referring to FIG. 10, the air guide cover 386 may have a structure extending to the outside of the circumferential surface of the humidifying module housing 410. Therefore, the air guide cover 386 may guide a portion of the air flowing upward along the blowing flow path 70 to flow into the second humidifying water tank 350.

Referring to FIGS. 13 and 14, the air guide cover 386 may include a horizontal wall 386a extending in the horizontal direction from the exhaust pipe 382, and a vertical wall 386b extending downward from the distal end of the horizontal wall 386a. The horizontal wall 386a may be disposed to be spaced apart upward from the air supply hole 387 and the upper end of the second humidifying water tank wall 352.

The vertical wall 386b is disposed to be spaced outward from the peripheral wall of the second humidifying water tank 350. The vertical wall 386b is disposed to be spaced outward from the peripheral wall of the humidifying module housing 410. The lower end of the vertical wall 386b may be located lower than the upper end of the second humidifying water tank wall 352.

Part of the air flowing through the blowing flow path 70 may flow upward into the space between the humidifying module housing 410 and the vertical wall 386b, flow to the upper side of the second humidifying water tank 350 along the horizontal wall 386a, and then flow to the lower portion of the second chamber 350a of the second humidifying water tank 350 along the air supply hole 387.

An air inlet flow path 387 through which air flows may be formed in the lower side of the air guide cover 386. The air inlet flow path 387 is disposed above the communication flow path 311. The air supply hole 387 may be disposed above the communication flow path 311.

The humidifying water tank cover 380 includes a lower extension wall 384 that protrudes from the humidifying water tank cover 380 toward the inside of the second humidifying water tank 350. The lower extension wall 384 extends downward from the humidifying water tank cover 380. The lower extension wall 384 has a structure that protrudes downward from the area where the exhaust pipe 382 is formed.

Referring to FIGS. 13 and 14, the lower extension wall 384 is disposed between the exhaust pipe inlet 382a and the air supply hole 387. When viewed from above, the lower extension wall 384 may have a bent shape in a direction of the exhaust pipe inlet 382a. Accordingly, the air flowing into the second humidifying water tank 350 through the air supply hole 387 may flow along the lower portion of the second chamber 350a and the inner circumferential surface of the second humidifying water tank wall 352.

The lower extension wall 384 may extend downward between the exhaust pipe inlet 382a and the air supply hole 387. The lower extension wall 384 may allow air flowed into the second humidifying water tank 350 through the air supply hole 387 to flow to the lower portion of the second chamber 350a.

The lower extension wall 384 is not disposed in the direction in which the second communication hole 311b is formed. That is, the lower extension wall 384 is not disposed in the direction in which the second communication hole 311b is opened. Therefore, Humidified air flowed into the second humidifying water tank 350 through the second communication hole 311b may flow to the exhaust pipe inlet 382a of the exhaust pipe 382.

The lower extension wall 384 includes a first lower extension wall 384a extending downward from the exhaust pipe 382 at a portion where the air supply hole 387 is formed, a second lower extension wall 384b disposed in one side of the first lower extension wall 384a, and a third lower extension wall 384c disposed in the other side of the first lower extension wall 384a.

The second lower extension wall 384b and the third lower extension wall 384c may be disposed in opposite directions. The second lower extension wall 384b and the third lower extension wall 384c may be disposed to face each other.

Referring to FIGS. 13 and 14, the length 384bL, 384cL of each of the second lower extension wall 384b and the third lower extension wall 384c protruding downward from the humidifying water tank cover 380 may be formed shorter than the length 384aL of the first lower extension wall 384a extending downward from the humidifying water tank cover 380.

The lower end of the first lower extension wall 384a is formed lower than the upper end of the water level sensor cover 368. The lower end of each of the second lower extension wall 384b and the third lower extension wall 384c is formed higher than the upper end of the water level sensor cover 368. The water level sensor cover 368 may be disposed in the lower side of the second lower extension wall 384b or the third lower extension wall 384c.

The lower end of the first lower extension wall 384a may be located lower than the lower end of the second lower extension wall 384b or the lower end of the third lower extension wall 384c. In the area facing the second communication hole 311b, a hole through which humidified air flowing from the second communication hole 311b flows into the exhaust pipe 382 may be formed between the second lower extension wall 384b and the third lower extension wall 384c.

The humidifying water tank cover 380 may be formed as one body with the first upper cover 322.

### <First connection pipe, second connection pipe, drain pipe>

The first connection pipe 390 supplies water from the first humidifying water tank 300 to the second humidifying water tank 350. The first connection pipe 390 may have one side connected to the first humidifying water tank 300, and the other side connected to the second humidifying water tank 350. The first connection pipe 390 may connect the outlet hole 316 of the first humidifying water tank 300 and the inlet hole 358 of the second humidifying water tank 350. The first connection pipe 390 may be disposed to be lowered downward from the outlet hole 316 to the inlet hole 358.

The first connection pipe 390 may extend along the circumferential circumference of the first humidifying water tank wall 302. The inlet hole 358 and the outlet hole 316 may be disposed in different directions. Therefore, the first connection pipe 390 may have a structure extending along the circumference of the first humidifying water tank wall 302.

The first connection pipe 390 may be formed to be longer than the second connection pipe 392. The second valve 402 may be disposed in the first connection pipe 390. The second valve 402 may be disposed closer to the first humidifying water tank 300 than the second humidifying water tank 350. The second valve 402 may be disposed closer to the outlet hole 316 than the inlet hole 358.

The second connection pipe 392 supplies water from the second humidifying water tank 350 to the first humidifying water tank 300. The pump 404 is disposed in the second connection pipe 392. The second connection pipe 392 connects the recovery discharge hole 360 of the second humidifying water tank wall 352 and the recovery inlet hole 314 of the first humidifying water tank wall 302.

The recovery discharge hole 360 may be located lower than the recovery inlet hole 314. The pump 404 may be located above the recovery discharge hole 360 and the recovery inlet hole 314.

The second connection pipe 392 may include a pump inlet pipe 392a connecting the second humidifying water tank 350 and the pump 404, and a pump outlet pipe 392b connecting the pump 404 and the first humidifying water tank 300. The pump 404 may be disposed in one side of the second humidifying water tank 350.

The humidifier includes a drain pipe 394 that drains the water existing in the first humidifying water tank 300, and a drain valve 396 that is disposed at the distal end of the drain pipe 394 and opens and closes the drain pipe 394. Referring to FIG. 11, the drain pipe 394 may be connected to one side of the first humidifying water tank 300. The drain pipe valve 396 may be disposed at the distal end of the drain pipe 394.

The drain pipe 394 may discharge water stored in the first humidifying water tank 300 to the outside. Referring to FIG. 10, the drain pipe 394 may extend to the outside of the humidifying module housing 410.

Operation of first humidifying water tank and second humidifying water tank>

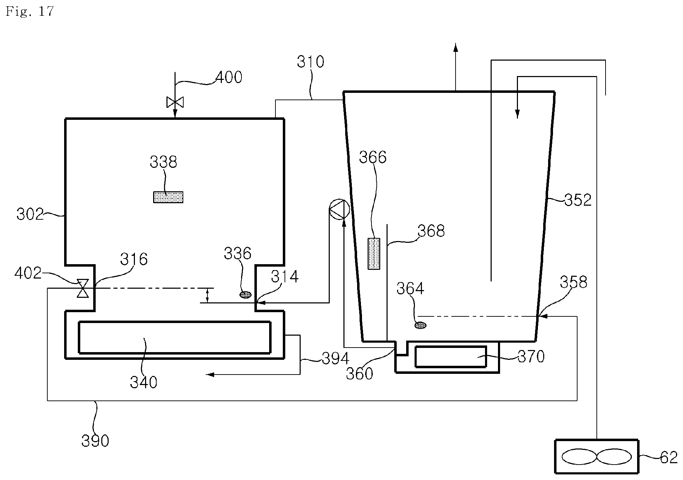

First, various sensors and valves disposed in each of the first humidifying water tank 300 and the second humidifying water tank 350, and the operation of the first humidifying water tank 300 and the second humidifying water tank 350 are explained with reference to FIG. 17.

The first humidifying water tank 300 heats the water supplied from the water tank 100. Water of the water tank 100 may be supplied to the upper side of the first humidifying water tank 300. The first valve 400 may open the supply pipe 230 so that water can be supplied to the first humidifying water tank 300.

The first valve 400 may operate based on the water level detected by the first water level sensor 338. The first valve 400 may open the supply pipe 230, when the water level detected by the first water level sensor 338 is lower than a set water level.

The first valve 400 closes the supply pipe 230 when the water level detected by the first water level sensor 338 is a set water level or higher. When the second valve 402 opens the first connection pipe 390, the first valve 400 may close the supply pipe 230. Therefore, the water flowing through the first connection pipe 390 may be water that has been completely heated in the first humidifying water tank 300.

The first valve 400 opens the supply pipe 230, when the water quality detected by the detection sensor 234 is a set level or higher. The detection sensor 234 may measure water quality by measuring the electrical conductivity of water. That is, the concentration of ions can be detected by measuring the electrical conductivity of water. Therefore, water, which has improved water quality, that passed through the water softener 140 may be supplied to the first humidifying water tank 300.

When water is supplied to the first humidifying water tank 300 at a certain level and the first valve 400 closes the supply pipe 230, the heater 340 may operate. The heater 340 heats the water stored in the first humidifying water tank 300. The humidified air generated by the operation of the heater 340 may flow to the second humidifying water tank 350 through the communication pipe 310.

When the heater 340 operates, the fan 62 may operate. That is, when the heater 340 heats the water stored in the first humidifying water tank 300, the fan 62 operates to supply air to the second humidifying water tank 350. The fan 62 may supply air to the second humidifying water tank 350 to cool the inside of the second humidifying water tank 350.

The heater 340 may operate until the temperature of the water detected by the first temperature sensor 336 reaches 100 degrees. The water stored in the first humidifying water tank 300 is heated to a boiling point and sterilized. When the temperature of the water detected by the first temperature sensor 336 reaches 100 degrees, the second valve 402 opens the first connection pipe 390. After the temperature of the water detected by the first temperature sensor 336 reaches 100 degrees, the second valve 402 may open the first connection pipe 390.

The first temperature sensor 336 may be disposed at a position equal to or lower than the outlet hole 316. Therefore, the temperature of the water remaining after the water in the second humidifying water tank 350 is discharged through the first connection pipe 390 may be detected.

When the second valve 402 is opened, the water stored in the first humidifying water tank 300 flows to the second humidifying water tank 350 by gravity. When the second valve 402 is opened, water may move until the water levels in the first humidifying water tank 300 and the second humidifying water tank 350 become the same. When the second valve 402 is opened, the water level in the first humidifying water tank 300 may be lowered to a height of the outlet hole 316 formed in the first humidifying water tank 300.

When the second water level sensor 366 is lower than an optimal height at which the vibrator 370 of the second humidifying water tank 350 can operate, the second valve 402 opens the first connection pipe 390. When a water level difference between the first humidifying water tank 300 and the second humidifying water tank 350 detected by the first water level sensor 338 and the second water level sensor 366 is formed, the second valve 402 opens the first connection pipe 390.

The second valve 402 may be opened for a set time. That is, the second valve 402 may be opened for a set time considering the time when the water levels of the first humidifying water tank 300 and the second humidifying water tank 350 become the same, and when the set time elapses, the first connection pipe 390 may be closed. Considering the time during which water in the first humidifying water tank 300 flows to the second humidifying water tank 350, the second valve 402 may be opened for a set time.

The fan 62 may operate while the second valve 402 is opened. By operating the fan 62, the air flowing into the second humidifying water tank 350 may cool the water flowing into the second humidifying water tank 350 through the first connection pipe 390.

The second temperature sensor 364 detects the temperature of the water stored in the second humidifying water tank 350. The second temperature sensor 364 may detect the temperature of water flowing into the second humidifying water tank 350 through the inlet hole 358. The vibrator 370 may operate when the temperature of the water detected by the second temperature sensor 364 is a set temperature or lower. The set temperature at which the vibrator 370 operates may be set in consideration of preventing damage to the vibrator 370. The second temperature sensor 364 may be disposed at the same height as the inlet hole 358 or at a lower height than the inlet hole 358. Therefore, the temperature of water flowing in through the inlet hole 358 can be detected.

The second water level sensor 366 may detect the water level of the second humidifying water tank 350. The second water level sensor 366 may detect the lowest water level of the second humidifying water tank 350 at which the vibrator 370 does not operate. If the water level of the second humidifying water tank 350 detected by the second water level sensor 366 is lower than a set water level, the operation of the vibrator 370 may be stopped.

The lowest water level at which operation is stopped may be determined based on the level of water stored in the second humidifying water tank 350 compared to the vibration level of the vibrator 370.

The second water level sensor 366 may detect the upper and lower water levels at which the operation of the vibrator 370 can be optimal, at a position where the water in the second humidifying water tank 350 is higher than the lowest water level at which the vibrator 370 stops operating.

In the second humidifying water tank 350, the water level sensor cover 368 is disposed between the second water level sensor 366 and the vibrator 370, so that water level can be stably detected even when the vibrator 370 operates.

The vibrator 370 may operate when the water level detected by the second water level sensor 366 is a set water level or higher. The vibrator 370 may include two vibration elements 372. Therefore, two vibration elements 372 can operate individually. Two vibration elements 372 can operate selectively.

When the vibrator 370 operates, the fan 62 may operate. Therefore, the humidified air generated by the vibrator 370 may be discharged to the outside of the humidifier together with the air flowing from the second humidifying water tank 350 to the first discharge flow path 32 by the fan 62. The fan 62 may activate the flow of humidified air generated by the vibrator 370.

The vibrator 370 and the heater 340 may operate simultaneously. At this time, the humidified air generated in the first humidifying water tank 300 flows to the first discharge flow path 32 through the second humidifying water tank 350 and, and the humidified air generated in the second humidifying water tank 350 may also flow to the first discharge flow path 32.

The pump 404 flows water from the second humidifying water tank 350 to the first humidifying water tank 300. The pump 404 may operate after the operation of the vibrator 370 is stopped. The pump 404 may operate after the second valve 402 closes the first connection pipe 390. When the pump 404 operates, the first valve 400 closes the supply pipe 230. When the pump 404 operates, the operation of the fan 62 may be stopped.

The recovery discharge hole 360 may be formed in one side of the height at which the vibrator 370 is located. The recovery discharge hole 360 is disposed at a lower position than the inlet hole 358 formed in the second humidifying water tank 350. The pump 404 is disposed at a higher position than a position where the recovery discharge hole 360 and the recovery inlet hole 314 are formed. Therefore, water of the second humidifying water tank wall 352 may be sucked in, and water may be supplied to the first humidifying water tank 300.

The pump 404 may operate in consideration of the water level of the first humidifying water tank 300 detected by the first water level sensor 338 and the water level of the second humidifying water tank 350 detected by the second water level sensor 366. When the water level in the first humidifying water tank 300 is an optimal level, the operation of the pump 404 may be prevented.

The water stored in the first humidifying water tank 300 may be discharged to the outside through the drain pipe 394. When the drain pipe valve 396 opens the drain pipe 394, the water stored in the first humidifying water tank 300 may be discharged to the outside. The drain hole 318 formed in the first humidifying water tank 300 may be disposed in a position where the heater 340 is disposed. Water stored between the heater 340 and the first humidifying water tank 300 may flow into the drain pipe 394 through the drain hole 318.

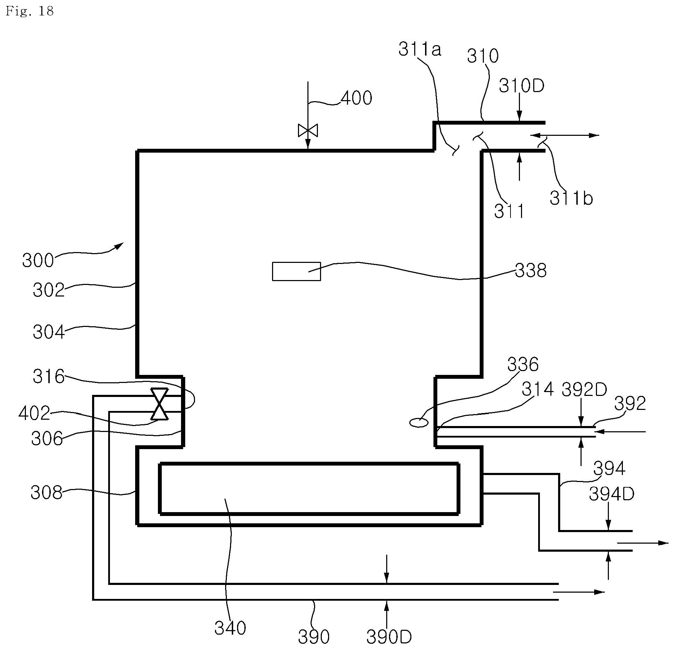

Referring to FIG. 18, the position of the hole and the size of the pipe connected to the first humidifying water tank 300 will be described.

The pipe diameter 390D of the first connection pipe 390 may be larger than the pipe diameter 392D of the second connection pipe 392. The pipe diameter 394D of the drain pipe 394 may be larger than the pipe diameter 390D of the first connection pipe 390. The pipe diameter 310D of the communication pipe 310 may be larger than the pipe diameter 390D of the first connection pipe 390.

The first connection pipe 390 may be connected to the first humidifying water tank 300 above the second connection pipe 392. The drain pipe 394 may be connected to the first humidifying water tank 300 below the first connection pipe 390. The communication pipe 310 may be connected to the first humidifying water tank 300 above the first connection pipe 390.

The first temperature sensor 336 may be disposed between a position where the first connection pipe 390 is connected to the first humidifying water tank 300 and a position where the second connection pipe 392 is connected to the first humidifying water tank 300.

### <Second Embodiment>

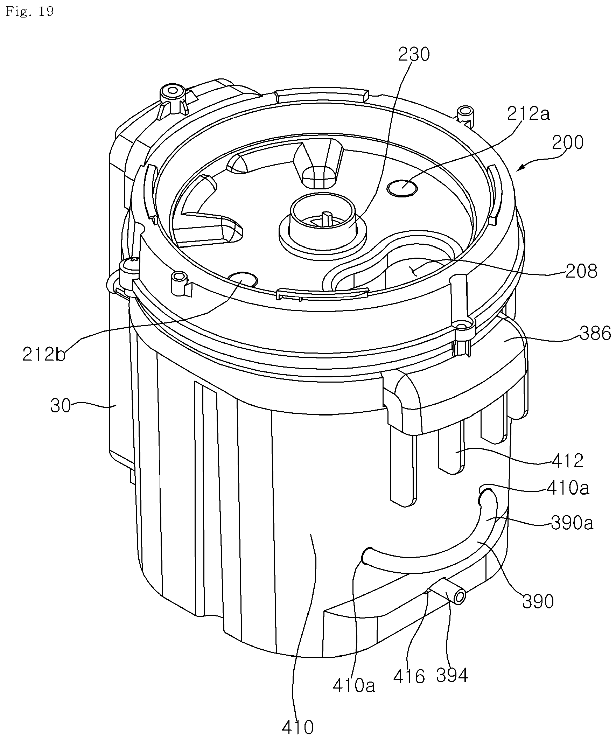

Hereinafter, the structure and arrangement of the first connection pipe 390 according to another embodiment will be described with reference to FIGS. 19 to 23. The description will focus on the differences from the arrangement of the existing first connection pipe 390. Structure not described below may be identified as the same structure as the structure described in FIGS. 1 to 18.

Referring to FIG. 19, a portion of the first connection pipe 390 is disposed to be exposed to the outside of the humidifying module housing 410. The first connection pipe 390 may include an exposure pipe 390a exposed to the outside of the humidifying module housing 410.

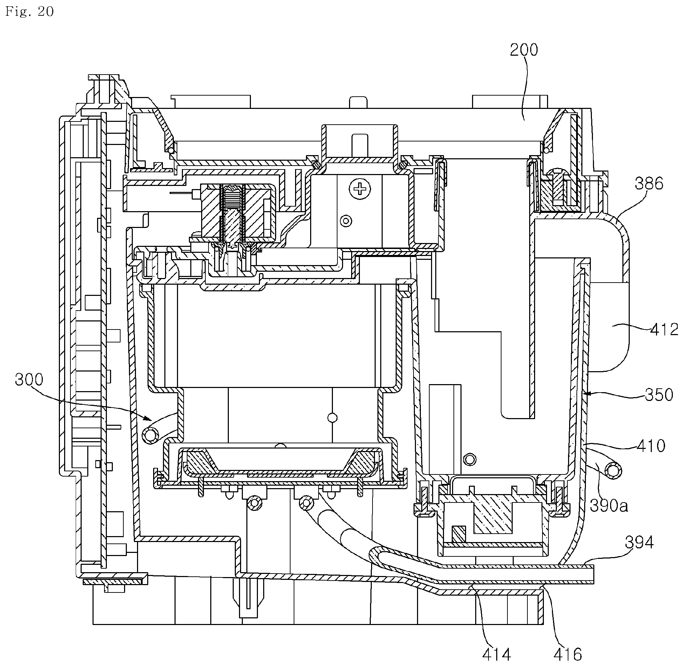

Referring to FIGS. 19 and 20, the exposure pipe 390a may be disposed on the lower side of the air guide cover 386. The exposure pipe 390a is disposed in contact with the air flowing into the air guide cover 386.

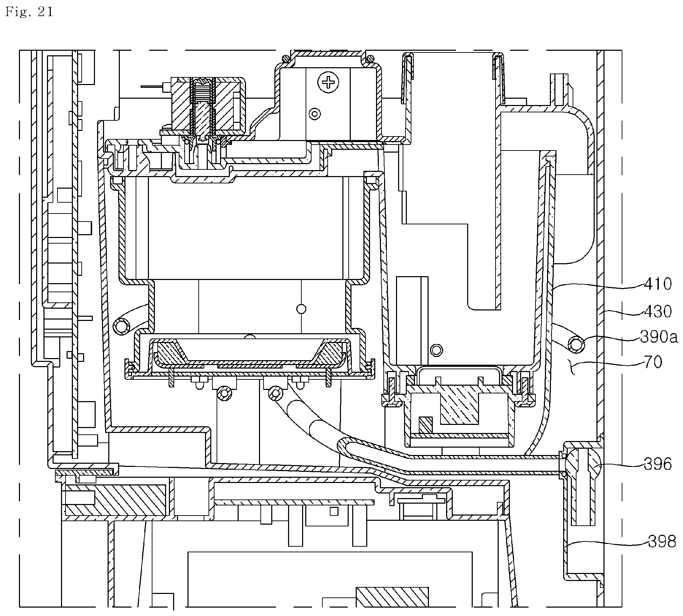

Referring to FIG. 21, the exposure pipe 390a may be disposed in the blowing flow path 70. Therefore, when the fan 62 operates, a flow of air may occur around the exposure pipe 390a. The water that flows through the first connection pipe 390 and is supplied to the second humidifying water tank 350 may be cooled in the exposure pipe 390a.

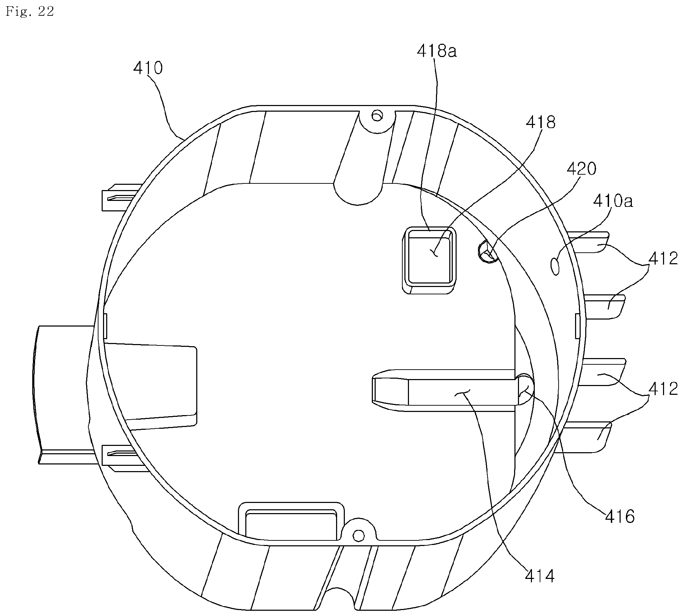

Referring to FIG. 22, a connection pipe hole 410a through which the first connection pipe 390 penetrates may be formed in one side of the humidifying module housing 410. The connection pipe hole 410a may fix the arrangement of the first connection pipe 390.

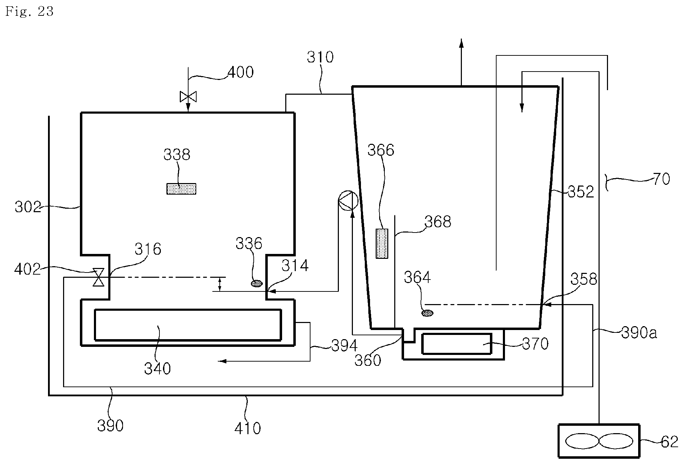

Referring to FIG. 23, a portion of the first connection pipe 390 connecting the first humidifying water tank 300 and the second humidifying water tank 350 is disposed outside the humidifying module housing 410. A portion of the first connection pipe 390 disposed outside the humidifying module housing 410 is disposed on the blowing flow path 70 so that the heated water flowing into the second humidifying water tank 350 may be cooled.

According to the humidifier of the present invention, one or more of the following effects are achieved.

When the temperature of the water heated in the first humidifying water tank is a set temperature or higher, water is supplied to the second humidifying water tank through a valve to humidify a completely sterilized water, thereby providing a user with clean humidified air.

In addition, when the temperature of the water in the second humidifying water tank is a certain temperature or lower, the vibrator operates and the stability of the vibrator can be ensured. This has an advantage of improving the reliability of the vibrator.

In addition, the connection pipe and the fan are operated to cool the water supplied to the humidifier, thereby stably operating the vibrator.

In addition, through the water softener, pure water from which ions are removed is heated, and through the first humidifying water tank in which the heater is disposed, the water sterilized by heating is humidified, and clean humidified air is provided to a user, thereby improving comfort in user's environment.

In addition, the water level and temperature inside the first humidifying water tank and the second humidifying water tank are sensed, and based on such information, the heater, the vibrator, the valve, and the fan are operated, thereby stably operating the humidifier.

Although the present invention has been described with reference to specific embodiments shown in the drawings, it is apparent to those skilled in the art that the present description is not limited to those exemplary embodiments and is embodied in many forms without departing from the scope of the present invention, which is defined by the following claims. These modifications should not be individually understood from the technical scope of the present invention.

## Claims

1. A humidifier comprising:
a water tank (100) for storing water;
a first humidifying water tank (300) disposed in a lower side of the water tank (100), and configured to heat water supplied from the water tank (100) by using a heater (340);
a second humidifying water tank (350) disposed in a lower side of the water tank (100), and configured to generate humidified air by using water supplied from the first humidifying water tank (300) by using a vibrator (370);
a first connection pipe (390) connecting the first humidifying water tank (300) and the second humidifying water tank (350);
a first valve (400) configured to open and close a flow path connecting the water tank (100) and the first humidifying water tank (300);
a second valve (402) configured to open and close the first connection pipe (390); and
a first temperature sensor (336) configured to detect a temperature of water inside the first humidifying water tank (300),
wherein the second valve (402) is configured to open the first connection pipe (390), when the temperature of water detected by the first temperature sensor (336) is equal to or higher than a first set temperature.

2. The humidifier of claim 1, wherein when the second valve (402) opens the first connection pipe (390), water in the first humidifying water tank (300) flows into the second humidifying water tank (350) due to a difference between a water level of the first humidifying water tank (300) and a water level of the second humidifying water tank (350).

3. The humidifier of claim 1 or 2, wherein the first valve (400) is disposed closer to the first humidifying water tank (300) than the second humidifying water tank (350).

4. The humidifier of any one of claims 1 to 3, further comprising a second temperature sensor (364) which is configured to detect a temperature of water stored inside the second humidifying water tank (350),
wherein the vibrator (370) is configured to operate, when the temperature of water in the second humidifying water tank (350) detected by the second temperature sensor (364) is below a set temperature.

5. The humidifier of any one of claims 1 to 4, further comprising a first water level sensor (338) configured to detect a water level inside the first humidifying water tank (300),
wherein the first valve (400) is configured to stop water supplied to the first humidifying water tank (300), when the water level detected by the first water level sensor (338) is equal to or higher than a first set water level.

6. The humidifier of any one of claims 1 to 5, wherein a fan (62) for supplying air to the second humidifying water tank (350) is configured to operate, when the heater (340) heats water stored in the first humidifying water tank (300).

7. The humidifier of any one of claims 1 to 6, wherein in the first humidifying water tank (300), an outlet hole (316) is formed in a portion connected to the first connection pipe (390),
wherein the first temperature sensor (336) is disposed in a position equal to or lower than the outlet hole (316).

8. The humidifier of any one of claims 5 to 7, further comprising a second water level sensor (366) configured to detect a water level inside the second humidifying water tank (350),
wherein the second valve (402) is configured to open the first connection pipe (390), when a level difference between water stored inside each of the first humidifying water tank (300) and the second humidifying water tank (350) detected by the first water level sensor (338) and the second water level sensor (366) is formed.

9. The humidifier of claim 8, wherein the second humidifying water tank (350) comprises a water level sensor cover (368) disposed between the second water level sensor (366) and the vibrator (370).

10. The humidifier of any one of claims 1 to 3, further comprising a second temperature sensor (364) configured to detect a temperature of water stored inside the second humidifying water tank (350),
wherein the vibrator (370) is configured to operate, when the temperature of water inside the second humidifying water tank (350) detected by the second temperature sensor (364) is below a set temperature.

11. The humidifier of claim 10, wherein in the second humidifying water tank (350), an inlet hole (358) is formed in a portion connected to the first connection pipe (390),
wherein the second temperature sensor (364) is disposed at the same height as the inlet hole (358) or at a lower height than the inlet hole (358).

12. The humidifier of any one of claims 1 to 11, further comprising:
a second connection pipe (392) which is spaced apart from the first connection pipe (390), and connects the first humidifying water tank (300) and the second humidifying water tank (350); and
a pump (404) configured to supply water stored inside the second humidifying water tank (350) to the first humidifying water tank (300) through the second connection pipe (392),
wherein the pump (404) is configured to operate after the vibrator (370) stops operating.

13. The humidifier of claim 12, wherein the pump (404) is configured to operate in consideration of a water level inside the first humidifying water tank (300) detected by the first water level sensor (338) and a water level inside the second humidifying water tank (350) detected by the second water level sensor (366).

14. The humidifier of any one of claims 1 to 13, further comprising:
a water softener (140) disposed inside the water tank (100), and configured to remove ion from water discharged from the water tank (100);
a supply pipe (230) which connects the water tank (100) and the first humidifying water tank (300); and
a detection sensor (234) configured to detect a quality of water stored inside the supply pipe (230),
wherein the first valve (400) is disposed in one end of the supply pipe (230), and configured to control water supplied to the first humidifying water tank (300).

15. The humidifier of claim 14, wherein the first valve (400) is configured to supply water to the first humidifying water tank (300), when the quality of water detected by the detection sensor (234) is equal to or higher than a set level.

## Patentansprüche

1. Befeuchter, der aufweist:
einen Wasserbehälter (100) zum Speichern von Wasser;
einen ersten Befeuchtungswasserbehälter (300), der in einer Unterseite des Wasserbehälters (100) angeordnet und konfiguriert ist, aus dem Wasserbehälter (100) zugeführtes Wasser unter Verwendung einer Heizung (340) zu erwärmen;
einen zweiten Befeuchtungswasserbehälter (350), der an einer Unterseite des Wasserbehälters (100) angeordnet und konfiguriert ist, unter Verwendung von aus dem ersten Befeuchtungswasserbehälter (300) zugeführten Wasser befeuchtete Luft unter Verwendung eines Vibrators (370) zu erzeugen;
eine erste Verbindungsleitung (390), die den ersten Befeuchtungswasserbehälter (300) und den zweiten Befeuchtungswasserbehälter (350) verbindet;
ein erstes Ventil (400), das konfiguriert ist, einen Strömungsweg zu öffnen und zu schließen, der den Wasserbehälter (100) und den ersten Befeuchtungswasserbehälter (300) verbindet;
ein zweites Ventil (402), das konfiguriert ist, die erste Verbindungsleitung (390) zu öffnen und zu schließen; und
einen ersten Temperatursensor (336), der konfiguriert ist, eine Temperatur des Wassers im ersten Befeuchtungswasserbehälter (300) zu erfassen,
wobei das zweite Ventil (402) konfiguriert ist, die erste Verbindungsleitung (390) zu öffnen, wenn die vom ersten Temperatursensor (336) erfasste Wassertemperatur gleich oder höher als eine erste eingestellte Temperatur ist.

2. Befeuchter nach Anspruch 1, wobei, wenn das zweite Ventil (402) die erste Verbindungsleitung (390) öffnet, Wasser im ersten Befeuchtungswasserbehälter (300) aufgrund eines Unterschieds zwischen einem Wasserstand des ersten Befeuchtungswasserbehälters (300) und einem Wasserstand des zweiten Befeuchtungswasserbehälters (350) in den zweiten Befeuchtungswasserbehälter (350) fließt.

3. Befeuchter nach Anspruch 1 oder 2, wobei das erste Ventil (400) näher am ersten Befeuchtungswasserbehälter (300) angeordnet ist als am zweiten Befeuchtungswasserbehälter (350).

4. Befeuchter nach einem der Ansprüche 1 bis 3, der ferner einen zweiten Temperatursensor (364) aufweist, der konfiguriert ist, eine Temperatur von Wasser zu erfassen, das im zweiten Befeuchtungswasserbehälter (350) gespeichert ist, wobei der Vibrator (370) konfiguriert ist, zu arbeiten, wenn die vom zweiten Temperatursensor (364) erfasste Temperatur des Wassers im zweiten Befeuchtungswasserbehälter (350) unter einer eingestellten Temperatur liegt.

5. Befeuchter nach einem der Ansprüche 1 bis 4, der ferner einen ersten Wasserstandssensor (338) aufweist, der konfiguriert ist, einen Wasserstand im ersten Befeuchtungswasserbehälter (300) zu erfassen, wobei das erste Ventil (400) konfiguriert ist, die Wasserzufuhr zum ersten Befeuchtungswasserbehälter (300) zu stoppen, wenn der vom ersten Wasserstandssensor (338) erfasste Wasserstand gleich oder höher als ein erster eingestellter Wasserstand ist.

6. Befeuchter nach einem der Ansprüche 1 bis 5, wobei ein Gebläse (62) zum Zuführen von Luft zum zweiten Befeuchtungswasserbehälter (350) konfiguriert ist, zu arbeiten, wenn die Heizung (340) im ersten Befeuchtungswasserbehälter (300) gespeichertes Wasser erwärmt.

7. Befeuchter nach einem der Ansprüche 1 bis 6, wobei in dem ersten Befeuchtungswasserbehälter (300) eine Auslassöffnung (316) in einem Abschnitt ausgebildet ist, der mit dem ersten Verbindungsleitung (390) verbunden ist, wobei der erste Temperatursensor (336) an einer Position angeordnet ist, die gleich oder niedriger als die Auslassöffnung (316) ist.

8. Befeuchter nach einem der Ansprüche 5 bis 7, der ferner einen zweiten Wasserstandssensor (366) aufweist, der konfiguriert ist, einen Wasserstand im zweiten Befeuchtungswasserbehälter (350) zu erfassen, wobei das zweite Ventil (402) konfiguriert ist, die erste Verbindungsleitung (390) zu öffnen, wenn eine von dem ersten Wasserstandssensor (338) und dem zweiten Wasserstandssensor (366) erfasste Pegeldifferenz zwischen dem in dem ersten Befeuchtungswasserbehälter (300) und dem zweiten Befeuchtungswasserbehälter (350) gespeicherten Wasser gebildet wird.

9. Befeuchter nach Anspruch 8, wobei der zweite Befeuchtungswasserbehälter (350) eine Wasserstandssensorabdeckung (368) aufweist, die zwischen dem zweiten Wasserstandssensor (366) und dem Vibrator (370) angeordnet ist.

10. Befeuchter nach einem der Ansprüche 1 bis 3, der ferner einen zweiten Temperatursensor (364) aufweist, der konfiguriert ist, eine Temperatur von Wasser zu erfassen, das in dem zweiten Befeuchtungswasserbehälter (350) gespeichert ist, wobei der Vibrator (370) konfiguriert ist, zu arbeiten, wenn die Temperatur des Wassers in dem zweiten Befeuchtungswasserbehälter (350), die durch den zweiten Temperatursensor (364) erfasst wird, unter einer eingestellten Temperatur liegt.

11. Befeuchter nach Anspruch 10, wobei in dem zweiten Befeuchtungswasserbehälter (350) eine Einlassöffnung (358) in einem Abschnitt ausgebildet ist, der mit der ersten Verbindungsleitung (390) verbunden ist, wobei der zweite Temperatursensor (364) auf derselben Höhe wie die Einlassöffnung (358) oder auf einer niedrigeren Höhe als die Einlassöffnung (358) angeordnet ist.

12. Befeuchter nach einem der Ansprüche 1 bis 11, der ferner aufweist:
eine zweite Verbindungsleitung (392), die von der ersten Verbindungsleitung (390) beabstandet ist und den ersten Befeuchtungswasserbehälter (300) und den zweiten Befeuchtungswasserbehälter (350) verbindet; und
eine Pumpe (404), die konfiguriert ist, im zweiten Befeuchtungswasserbehälter (350) gespeichertes Wasser durch die zweite Verbindungsleitung (392) dem ersten Befeuchtungswasserbehälter (300) zuzuführen,
wobei die Pumpe (404) konfiguriert ist, zu arbeiten, nachdem der Vibrator (370) aufgehört hat zu arbeiten.

13. Befeuchter nach Anspruch 12, wobei die Pumpe (404) konfiguriert ist, unter Berücksichtigung eines vom ersten Wasserstandssensor (338) erfassten Wasserstands im ersten Befeuchtungswasserbehälter (300) und eines vom zweiten Wasserstandssensor (366) erfassten Wasserstands im zweiten Befeuchtungswasserbehälter (350) zu arbeiten.

14. Befeuchter nach einem der Ansprüche 1 bis 13, der ferner aufweist:
einen Wasserenthärter (140), der innerhalb des Wasserbehälters (100) angeordnet ist und konfiguriert ist, Ionen aus dem aus dem Wasserbehälter (100) abgegebenen Wasser zu entfernen;
eine Zufuhrleitung (230), die den Wasserbehälter (100) und den ersten Befeuchtungswasserbehälter (300) verbindet; und
einen Erfassungssensor (234), der konfiguriert ist, eine Qualität des in der Zufuhrleitung (230) gespeicherten Wassers zu erfassen,
wobei das erste Ventil (400) in einem Ende der Zufuhrleitung (230) angeordnet und konfiguriert ist, die dem ersten Befeuchtungswasserbehälter (300) zugeführte Wassermenge zu steuern.

15. Befeuchter nach Anspruch 14, wobei das erste Ventil (400) konfiguriert ist, dem ersten Befeuchtungswasserbehälter (300) Wasser zuzuführen, wenn die vom Erfassungssensor (234) erfasste Wasserqualität gleich oder höher als ein festgelegter Wert ist.

## Revendications

1. Humidificateur, comprenant :
un réservoir d'eau (100) destiné à stocker de l'eau ;
un premier réservoir d'eau d'humidification (300) disposé dans une partie inférieure du réservoir d'eau (100) et prévu pour chauffer l'eau refoulée du réservoir d'eau (100) au moyen d'un dispositif de chauffage (340) ;
un deuxième réservoir d'eau d'humidification (350) disposé dans une partie inférieure du réservoir d'eau (100) et prévu pour générer de l'air humidifié avec de l'eau refoulée du premier réservoir d'eau d'humidification (300) au moyen d'un vibrateur (370) ;
un premier tuyau de raccordement (390) reliant le premier réservoir d'eau d'humidification (300) au deuxième réservoir d'eau d'humidification (350) ;
une première vanne (400) prévue pour ouvrir et fermer un chemin d'écoulement reliant le réservoir d'eau (100) au premier réservoir d'eau d'humidification (300) ;
une deuxième vanne (402) prévue pour ouvrir et fermer le premier tuyau de raccordement (390) ; et
un premier capteur de température (336) prévu pour détecter la température de l'eau à l'intérieur du premier réservoir d'eau d'humidification (300),
où la deuxième vanne (402) est prévue pour ouvrir le premier tuyau de raccordement (390) si la température de l'eau détectée par le premier capteur de température (336) est égale ou supérieure à une première température de consigne.

2. Humidificateur selon la revendication 1, où, lorsque la deuxième vanne (402) ouvre le premier tuyau de raccordement (390), l'eau dans le premier réservoir d'eau d'humidification (300) s'écoule dans le deuxième réservoir d'eau d'humidification (350) en raison d'une différence entre le niveau d'eau du premier réservoir d'eau d'humidification (300) et le niveau d'eau du deuxième réservoir d'eau d'humidification (350).

3. Humidificateur selon la revendication 1 ou la revendication 2, où la première vanne (400) est plus proche du premier réservoir d'eau d'humidification (300) que du deuxième réservoir d'eau d'humidification (350).

4. Humidificateur selon l'une des revendications 1 à 3, comprenant en outre un deuxième capteur de température (364) prévu pour détecter la température de l'eau stockée à l'intérieur du deuxième réservoir d'eau d'humidification (350), où le vibrateur (370) est prévu pour fonctionner si la température de l'eau dans le deuxième réservoir d'eau d'humidification (350) détectée par le deuxième capteur de température (364) est inférieure à une température définie.

5. Humidificateur selon l'une des revendications 1 à 4, comprenant en outre un premier capteur de niveau d'eau (338) prévu pour détecter le niveau d'eau à l'intérieur du premier réservoir d'eau d'humidification (300), où la première vanne (400) est prévue pour arrêter le refoulement d'eau vers le premier réservoir d'eau d'humidification (300) si le niveau d'eau détecté par le premier capteur de niveau d'eau (338) est égal ou supérieur à un premier niveau d'eau défini.

6. Humidificateur selon l'une des revendications 1 à 5, où un ventilateur (62) destiné à refouler de l'air vers le deuxième réservoir d'eau d'humidification (350) est prévu pour fonctionner lorsque le dispositif de chauffage (340) chauffe l'eau stockée dans le premier réservoir d'eau d'humidification (300).

7. Humidificateur selon l'une des revendications 1 à 6, où, dans le premier réservoir d'eau d'humidification (300), un trou de sortie (316) est formé dans une partie raccordée au premier tuyau de raccordement (390), le premier capteur de température (336) étant disposé à un emplacement à la même hauteur ou plus bas que le trou de sortie (316).

8. Humidificateur selon l'une des revendications 5 à 7, comprenant en outre un deuxième capteur de niveau d'eau (366) prévu pour détecter le niveau d'eau à l'intérieur du deuxième réservoir d'eau d'humidification (350), où la deuxième vanne (402) est prévue pour ouvrir le premier tuyau de raccordement (390) si une différence de niveau entre l'eau stockée à l'intérieur du premier réservoir d'eau d'humidification (300) et du deuxième réservoir d'eau d'humidification (350) détectée par le premier capteur de niveau d'eau (338) et le deuxième capteur de niveau d'eau (366) est présentée.

9. Humidificateur selon la revendication 8, où le deuxième réservoir d'eau d'humidification (350) comprend un couvercle de capteur de niveau d'eau (368) disposé entre le deuxième capteur de niveau d'eau (366) et le vibrateur (370).

10. Humidificateur selon l'une des revendications 1 à 3, comprenant en outre un deuxième capteur de température (364) prévu pour détecter la température de l'eau stockée à l'intérieur du deuxième réservoir d'eau d'humidification (350), le vibrateur (370) étant prévu pour fonctionner si la température de l'eau à l'intérieur du deuxième réservoir d'eau d'humidification (350) détectée par le deuxième capteur de température (364) est inférieure à une température définie.

11. Humidificateur selon la revendication 10, où, dans le deuxième réservoir d'eau d'humidification (350), un trou d'entrée (358) est formé dans une partie raccordée au premier tuyau de raccordement (390), le deuxième capteur de température (364) étant disposé à la même hauteur que le trou d'entrée (358) ou à une hauteur inférieure à celle du trou d'entrée (358).

12. Humidificateur selon l'une des revendications 1 à 11, comprenant en outre :
un deuxième tuyau de raccordement (392) espacé du premier tuyau de raccordement (390) et reliant le premier réservoir d'eau d'humidification (300) au deuxième réservoir d'eau d'humidification (350) ; et
une pompe (404) prévue pour refouler de l'eau stockée à l'intérieur du deuxième réservoir d'eau d'humidification (350) vers le premier réservoir d'eau d'humidification (300) par le deuxième tuyau de raccordement (392),
où la pompe (404) est prévue pour fonctionner après que le vibrateur (370) a cessé de fonctionner.

13. Humidificateur selon la revendication 12, où la pompe (404) est prévue pour fonctionner en tenant compte du niveau d'eau à l'intérieur du premier réservoir d'eau d'humidification (300) détecté par le premier capteur de niveau d'eau (338) et du niveau d'eau à l'intérieur du deuxième réservoir d'eau d'humidification (350) détecté par le deuxième capteur de niveau d'eau (366).

14. Humidificateur selon l'une des revendications 1 à 13, comprenant en outre :
un adoucisseur d'eau (140) disposé à l'intérieur du réservoir d'eau (100) et prévu pour éliminer les ions de l'eau refoulée du réservoir d'eau (100) ;
un tuyau d'alimentation (230) reliant le réservoir d'eau (100) au premier réservoir d'eau d'humidification (300) ; et
un capteur de détection (234) prévu pour détecter la qualité de l'eau stockée à l'intérieur du tuyau d'alimentation (230),
où la première vanne (400) est disposée à une extrémité du tuyau d'alimentation (230) et est prévue pour commander le refoulement d'eau vers le premier réservoir d'eau d'humidification (300).

15. Humidificateur selon la revendication 14, où la première vanne (400) est prévue pour refouler de l'eau vers le premier réservoir d'eau d'humidification (300) si la qualité d'eau détectée par le capteur de détection (234) est égale ou supérieure à un degré défini.
